# EUROPEAN PATENT APPLICATION

(11) **EP 4 557 487 A1**
(43) Date of publication of application: **21.05.2025**
(21) Application number: 23920386.2
(22) Date of filing: 08.02.2023
(51) Int. Cl.: H01M 50/358

(54) **HOUSING COMPONENT, BATTERY CELL, BATTERY, AND ELECTRIC DEVICE**

(71) Applicant: CONTEMPORARY AMPEREX TECHNOLOGY (HONG KONG) LIMITED, Hong Kong (HK)
(72) Inventor: CHEN, Xiaobo, Ningde, Fujian 352100 (CN); GU, Mingguang, Ningde, Fujian 352100 (CN)
(74) Representative: Ran, Handong
(86) International application number: PCT/CN2023/075010
(87) International publication number: WO 2024/164178

(57) **Abstract**

The embodiments of the present application belong to the technical field of batteries. Provided are a housing component, a battery cell, a battery, and an electric device. The housing component comprises a first surface and a second surface, which are arranged opposite each other in a first direction. The housing component is provided with a first groove portion which is recessed from the first surface in a direction approaching the second surface. A weak area is formed at the bottom of the first groove portion of the housing component, and is configured to be broken when the battery cell releases internal pressure. **In** the first direction, a protrusion protruding from the second surface is provided on the side of the weak area facing away from the first groove portion. The protrusion strengthens the weak area, can improve the anti-fatigue strength of the weak area, and reduce the risk of the weak area being broken during normal use of the battery cell, thereby prolonging the service life of the battery cell.

## Description

### TECHNICAL FIELD

The present application relates to the technology field of batteries, and specifically to a housing component, a battery cell, a battery, and an electric device.

### BACKGROUND ART

With the development of new energy technologies, the application of batteries is becoming increasingly widespread. For example, they are used in mobile phones, laptops, electric bicycles, electric cars, electric airplanes, electric ships, electric toy cars, electric toy ships, electric toy airplanes, and electric tools.

For a typical battery cell, the battery cell is provided with a pressure relief mechanism, and the pressure relief mechanism releases the internal pressure of the battery cell during thermal runaway of the battery cell, thus improving the reliability of the battery cell. In addition to improving the reliability of the battery cell, the service life of the battery cell is also an issue that needs to be considered. Therefore, how to improve the service life of the battery cells is an urgent issue to be addressed in battery technology.

### SUMMARY

The embodiments of the present application provide a housing component, a battery cell, a battery, and an electric device to effectively enhance the service life of the battery cell.

In a first aspect, the embodiment of the present application provides a housing component for a battery cell. The housing component includes a first surface and a second surface, wherein the first surface and the second surface are oppositely arranged along a first direction. The housing component is provided with a first groove portion recessed from the first surface in a direction proximate to the second surface. The housing component forms a weak region at the bottom of the first groove portion, and the weak region is configured to be damaged when the battery cell releases internal pressure. Along the first direction, a protrusion protruding from the second surface is arranged on a side of the weak region away from the first groove portion.

In the above technical solution, the protrusion protruding from the second surface is arranged on a side of the weak region away from the first groove portion. The protrusion strengthens the weak region, which improves the fatigue strength of the weak region and reduces the risk of the weak region being damaged during the normal use of the battery cell, thereby improving the service life of the battery cell.

In some embodiments, along the first direction, the first groove portion includes a first groove bottom surface located between the first surface and the second surface. A minimum distance between the first groove bottom surface and the second surface is D, and a height of the protrusion protruding from the second surface is H, satisfying a condition: 0.01 ≤ H/(D+H) ≤ 0.67. When H/(D+H) > 0.67, the strength of the weak region becomes excessively high, making it difficult for the weak region to be damaged during the thermal runaway of the battery cell, which can result in delayed pressure relief and increase the likelihood of battery cell explosion. When H/(D+H) < 0.01, the strengthening capability of the protrusion on the weak region is insufficient, which increases the risk of the weak region being damaged during the normal use of the battery cell. With 0.01 ≤ H/(D+H) ≤ 0.67, the risk of the weak region being damaged during the normal use of the battery cell can be further reduced, the service life of the battery cell can be improved, the risk of explosion during thermal runaway of the battery cell can be reduced, and the reliability of the battery cell can be enhanced.

In some embodiments, 0.03 ≤ H/(D+H) ≤ 0.33. This enables the comprehensive performance of the housing component to be better, thus ensuring that the weak region can be damaged in time during the thermal runaway of the battery cell. This also provides sufficient fatigue strength for the weak region under normal usage conditions of the battery cell, thereby improving the service life of the battery cell.

In some embodiments, along the first direction, the height of the protrusion protruding from the second surface is H, satisfying a condition: 0.01mm ≤ H ≤ 0.96mm. This ensures that the protrusion provides a good strengthening effect on the weak region. The height of the protrusion is not too high, thereby reducing the space occupied by the protrusion on the outside or inside of the battery cell.

In some embodiments, 0.05mm≤H≤0.55mm. This further reduces the space occupied by the protrusion on the outside or inside of the battery cell and enhances the strengthening effect of the protrusion on the weak region.

In some embodiments, the first groove portion includes a first groove bottom surface and a first groove side surface connected to the first groove bottom surface. An angle between the first groove side surface and the first groove bottom surface is θ with a unit of degree. The first groove side surface is connected to the first groove bottom surface at a connection position. Along the first direction, a minimum residual thickness of the housing component at the connection position is L with a unit of mm, satisfying a condition: 90 ≤ θ/L ≤ 5833. The service life of the battery cell can be improved, the risk of explosion during thermal runaway of the battery cell can be reduced, and the reliability of the battery cell can be enhanced.

In some embodiments, 220≤θ/L≤933. This further improves the service life of the battery cell and enhances the reliability of the battery cell.

In some embodiments, 90°≤θ≤175°.

In some embodiments, 0.03mm≤L≤1mm.

In some embodiments, along the first direction, the first groove portion includes a first groove bottom surface located between the first surface and the second surface. The outer surface of the protrusion connects with the second surface to form a first profile line, and the projection of the first profile line along the first direction is located within the first groove bottom surface. This reduces the coverage of the protrusion on the weak region, making it easier for the weak region to be damaged during the thermal runaway of the battery cell and allowing for timely pressure relief of the internal pressure of the battery cell.

In some embodiments, the projection of the first profile line along the first direction coincides with an edge line of the first groove bottom surface within the first groove bottom surface. This ensures that the protrusion completely covers the weak region so that the protrusion provides a good strengthening effect on the weak region. Thus, the fatigue strength of the weak region is increased, and the risk of the weak region being damaged during normal use of the battery cell is reduced. Additionally, the weak region at the edge line of the first groove bottom surface is weaker, making it easier for the weak region to be damaged during the thermal runaway of the battery cell.

In some embodiments, the projection of the first profile line along the first direction does not contact with the edge line of the first groove bottom surface within the first groove bottom surface. This ensures the weak region to have a region that is not covered by the protrusion. The region has a thinner thickness and is more easily damaged during the thermal runaway of the battery cell, thus improving the timely pressure relief of the battery cell.

In some embodiments, along the first direction, the first groove portion includes a first groove bottom surface located between the first surface and the second surface. The outer surface of the protrusion connects with the second surface to form a first profile line. The first profile line defines a first region. The projection of the edge line of the first groove bottom surface along the first direction is located within the first region and does not contact the first profile line. This ensures that the protrusion completely covers the weak region. The protrusion is connected to the weak region and is also connected to the region of the housing component outside the weak region, thus further enhancing the strengthening effect of the protrusion on the weak region and increasing the fatigue strength of the weak region.

In some embodiments, the outer surface of the protrusion connects with the second surface to form a first profile line, and the first profile defines a first region. An area of the first region is S₁, and an area of a portion of the projection of the first region along the first direction, which is located within the first groove portion, is S₂, satisfying a condition: S₂/S₁ ≥ 0.6. This allows more of the protrusion to cover the weak region, thus enhancing the strengthening effect of the protrusion on the weak region.

In some embodiments, along the first direction, the surface of the protrusion away from the second surface is a flat surface. This ensures that the thickness of the region in which the protrusion is covered by the flat surface is more uniform, thus providing uniform strengthening to different regions of the weak region. This structure makes the protrusion easier to form.

In some embodiments, along the first direction, a surface of the protrusion away from the second surface is an arcuate surface, and a cross-section of the arcuate surface is a curve that protrudes in a direction opposite to the second surface at a middle position. The structure makes the cross-section of the protrusion approximately arch-shaped, offering better resistance to deformation. When the protrusion is subjected to impact force, it is less likely to damage the weak region.

In some embodiments, an extension direction of the protrusion coincides with an extension direction of the first groove portion. This realizes the strengthening of more regions of the weak region, thus enhancing the strengthening effect of the protrusion on the weak region.

In some embodiments, the protrusion and the weak region are integrally molded. This provides a better-strengthening effect of the protrusion on the weak region.

In some embodiments, the first groove portion is stamped into the housing component. When stamping the first groove portion into the housing component, a protrusion protruding from the second surface can be formed at the corresponding position to the first groove portion, thus achieving the integral mold of the protrusion and the weak region.

In some embodiments, the first groove portion defines a pressure relief region, and the first groove portion is arranged along an edge of the pressure relief region. During pressure relief, the pressure relief region can open with the first groove portion as a boundary, thus increasing the pressure relief area of the housing component and improving the timeliness of pressure relief.

In some embodiments, the first groove portion includes a first groove section and a second groove section, wherein the first groove section intersects with the second groove section, and both the first groove section and the second groove section are arranged along the edge of the pressure relief region. The stress is more concentrated at the intersection position of the first groove section and the second groove section, making the weak region at the intersection position of the first groove section and the second groove section more prone to damage. This enhances the pressure relief sensitivity of the housing component and enables timely pressure relief when the internal pressure of the battery cell reaches the bursting pressure. Under a fixed bursting pressure of the battery cell, the weak region can be made thicker, thus reducing the forming depth of the first groove portion.

In some embodiments, the first groove portion further includes a third groove section, where the first groove section is arranged opposite to the third groove section, and the third groove section intersects with the second groove section. The first groove section, the second groove section, and the third groove section are arranged along the edge of the pressure relief region. Thus, the pressure relief region can open with the first groove section, the second groove section, and the third groove section as boundaries, thus enabling large-area pressure relief. Additionally, the stress is more concentrated at the intersection position of the third groove section and the second groove section, making the weak region at the intersection position of the third groove section and the second groove section more prone to damage. This enhances the pressure relief sensitivity of the housing component and enables timely pressure relief when the internal pressure of the battery cell reaches the bursting pressure.

In some embodiments, the first groove section, the second groove section, and the third groove section are sequentially connected. The structure of the first groove portion is simple and easy to form.

In some embodiments, the first groove section and the second groove section intersect at a first position, wherein the first position is offset from both ends of the first groove section in the extension direction. The third groove section and the second groove section intersect at a second position, wherein the second position is offset from both ends of the third groove section in the extension direction. The structure of the first groove portion defines two pressure relief regions, and the two pressure relief regions are located on both sides of the second groove section, respectively. The two pressure relief regions can open in opposite directions for pressure relief, thus effectively improving the pressure relief efficiency of the housing component.

In some embodiments, the first position is located at a midpoint of the first groove section in the extension direction, and the second position is located at the midpoint of the third groove section in the extension direction. This ensures that the weak regions at the first position and second position are more prone to be damaged, thus improving the pressure relief sensitivity of the housing component and enhancing the timeliness of pressure relief.

In some embodiments, the first groove portion is a groove extending along a non-closed trajectory. The pressure relief region defined by the first groove portion can open in a flipping manner, and after opening, the pressure relief region can connect with other regions of the housing component, thus reducing the risk of splashing when the pressure relief region opens.

In some embodiments, the first groove portion is an arc-shaped groove. The structure of the arc-shaped groove is simple and easy to form. During pressure relief, the pressure relief region can quickly rupture along the arc-shaped groove, thereby enabling rapid opening of the pressure relief region.

In some embodiments, the first groove portion is a groove extending along a closed trajectory. During pressure relief, the housing component can rupture along the first groove portion, allowing the pressure relief region to open in a detached manner. This increases the pressure relief area of the housing component and improves the pressure relief rate of the housing component.

In some embodiments, the first groove portion is an annular groove. The structure of the annular groove is simple and easy to form. During pressure relief, the housing component can rupture quickly along the annular groove to enable rapid opening of the pressure relief region.

In some embodiments, the housing component provides a second groove portion. Along a direction from the first surface toward the second surface, the second groove portion and the first groove portion are arranged sequentially, and the groove bottom surface of the second groove portion forms the first surface. During forming, the second groove portion can first be formed on the housing component, and then the first groove portion is formed on the housing component to form a weak region. That is, the weak region is formed after at least two levels of groove portions are formed on the housing component, which can reduce the forming depth of each level of the groove portion, thereby lowering the forming force experienced by the housing component during forming and reducing the risk of cracks in the housing component.

In some embodiments, the first groove portion and the pressure relief region are both located on the groove bottom wall of the second groove portion. When the pressure relief region opens toward the interior of the second groove portion, the second groove portion can provide a clearance space for the pressure relief region.

In some embodiments, the cross-section of the second groove portion in a direction perpendicular to the first direction is polygonal or circular. The structure of the second groove portion is simple, easy to form, and capable of providing more clearance space for the pressure relief region during opening.

In some embodiments, an extension direction of the second groove portion coincides with an extension direction of the first groove portion. The shape of the second groove portion is essentially consistent with the shape of the first groove portion, facilitating the forming of the second groove portion. When the first groove portion and the second groove portion are formed using a stamping process, the extrusion volume during the forming of the second groove portion can be reduced, thereby lowering the forming force on the housing component.

In some embodiments, the housing component provides a third groove portion, and the second groove portion is arranged on the groove bottom surface of the third groove portion. The first groove portion, the second groove portion, and the pressure relief region are all located on the groove bottom wall of the third groove portion. During forming, the third groove portion can first be formed on the housing component, the second groove portion can be formed on the housing component, and then the first groove portion can be formed on the housing component to form a weak region. That is, the weak region is formed after at least three levels of groove portions are formed on the housing component, which can reduce the forming depth of each level of the groove portion, thereby lowering the forming force experienced by the housing component during forming and reducing the risk of cracks in the housing component. Additionally, since the pressure relief region is located on the groove bottom wall of the third groove portion, when the pressure relief region opens toward the interior of the third groove portion, the third groove portion can provide a clearance space for the pressure relief region.

In some embodiments, the cross-section of the third groove portion in a direction perpendicular to the first direction is polygonal or circular. The structure of the third groove portion is simple, easy to form, and capable of providing more clearance space for the pressure relief region during opening.

In some embodiments, the housing component is an end cover, and the end cover is configured to seal an opening of the housing, wherein the housing is configured to accommodate the electrode assembly. This enables the end cover to have a pressure relief function, thus improving the reliability of the battery cell. Additionally, the end cover, as the housing component, makes forming the weak region on the end cover less difficult.

In some embodiments, the second surface is the surface of the end cover facing the interior of the housing. Thus, the protrusion on the second surface is located inside the housing, thus effectively utilizing the internal space of the housing.

In some embodiments, the housing component is a housing, and the housing has an opening, wherein the housing is configured to accommodate the electrode assembly. The shell has a pressure relief function, thus ensuring the battery cell to have good reliability.

In some embodiments, the housing includes multiple integrally molded wall portions, and the multiple wall portions collectively define an internal space of the housing, with at least one wall portion forming a weak region. The integrally molded wall portions provide the housing with good structural stability, and the wall portions are less likely to be damaged when forming the weak region.

In some embodiments, the multiple wall portions include a bottom wall and multiple side walls surrounding the bottom wall, wherein the housing forms an opening at the end opposite the bottom wall; the bottom wall forms a weak region; and/or at least one side wall forms a weak region. If the bottom wall of the housing forms a weak region, the battery cell can relieve pressure through the bottom wall. If at least one side wall forms a weak region, the battery cell can relieve pressure through the side wall.

In some embodiments, the second surface is the surface of the wall portion that is provided with the weak region and faces the interior of the housing. Thus, the protrusion on the second surface is located inside the housing, thus effectively utilizing the internal space of the housing.

In some embodiments, the housing is rectangular in shape, which is suitable for rectangular battery cells, thereby meeting the requirements for large-capacity battery cells.

In some embodiments, the material of the housing component includes aluminum alloy. Aluminum alloy housing components are lightweight, have good ductility, and are easy to form.

In a second aspect, the embodiments of the present application provide a battery cell, including any one of the housing components provided in any embodiment of the first aspect.

In some embodiments, the battery cell further includes a housing, wherein the housing has an opening, and the housing is configured to accommodate the electrode assembly. The housing component is the end cover, and the end cover seals the opening.

In some embodiments, the housing component is a housing, and the housing has an opening, wherein the housing is configured to accommodate the electrode assembly. The battery cell further includes an end cover, and the end cover seals the opening.

In a third aspect, the embodiments of the present application provide a battery, including any one of the battery cells provided in any embodiment of the second aspect.

In a fourth aspect, the embodiments of the present application further provide an electric device, which includes the battery cell provided in any of the embodiments as described in the second aspect. The battery cell is configured to supply electric energy.

### BRIEF DESCRIPTION OF DRAWINGS

To more clearly illustrate the technical solutions of the embodiments of the present application, the following will briefly introduce the drawings used in the embodiments. It should be understood that the following drawings only show some embodiments of the present application, and therefore they should not be regarded as a limitation on the scope. Those ordinary skilled in the art can also obtain other related drawings based on these drawings without inventive effort.
FIG. 1 is a schematic diagram of a structure of a vehicle provided by some embodiments of the present application;
FIG. 2 is an exploded view of a battery provided by some embodiments of the present application;
FIG. 3 is an exploded view of a battery cell provided in some embodiments of the present application;
FIG. 4 is a structural schematic diagram of a housing component provided in some embodiments of the present application;
FIG. 5 is a sectional view in A-A direction of a housing component shown in FIG. 4;
FIG. 6 is a partially enlarged view of a housing component at location B shown in FIG. 5 (where a first groove bottom surface is planar);
FIG. 7 is a partially enlarged view of a housing component provided in some embodiments of the present application (where a first groove bottom surface is an arcuate surface);
FIG. 8 is a view along direction C of a housing component shown in FIG. 6;
FIG. 9 is a view along direction E of a housing component shown in FIG. 6;
FIG. 10 is a partially enlarged view of a housing component provided in some embodiments of the present application (where a projection of a first profile line within a first groove bottom surface does not contact an edge line of a first groove bottom surface);
FIG. 11 is a partially enlarged view of a housing component provided in other embodiments of the present application (where a projection of a first profile line within a first groove bottom surface does not contact an edge line of a first groove bottom surface);
FIG. 12 is a view along direction F of a housing component shown in FIG. 10;
FIG. 13 is a partially enlarged view of an external component provided in some embodiments of the present application (where a projection of an edge line of a first groove bottom surface along a first direction is located within a first region and does not contact a first profile line);
FIG. 14 is a view along direction G of a housing component shown in FIG. 13;
FIG. 15 is a partially enlarged view of an external component provided in other embodiments of the present application (where a projection of an edge line of a first groove bottom surface along a first direction is located within a first region and does not contact a first profile line);
FIG. 16 is a partially enlarged view of an external component provided in some other embodiments of the present application (where a projection of an edge line of a first groove bottom surface along a first direction is located within a first region and does not contact a first profile line);
FIG. 17 is a view along direction I of a housing component shown in FIG. 16 (showing a first region);
FIG. 18 is a view along direction I of a housing component shown in FIG. 16 (showing a portion of a first region whose projection along a first direction is located within a first groove portion);
FIG. 19 is a partially enlarged view of a housing component provided in some embodiments of the present application (where a surface of a protrusion away from a second surface is an arcuate surface);
FIG. 20 is a partially enlarged view of a housing component provided in other embodiments of the present application (where a surface of a protrusion facing away from a second surface is an arcuate surface);
FIG. 21 is a structural schematic diagram of a housing component provided in some embodiments of the present application (where a first groove portion is V-shaped);
FIG. 22 is a structural schematic diagram of a housing component provided in some embodiments of the present application (where a first groove portion is U-shaped);
FIG. 23 is a structural schematic diagram of a housing component provided in some embodiments of the present application (where a first groove portion is H-shaped);
FIG. 24 is a structural schematic diagram of a housing component provided in some embodiments of the present application (where a first groove portion is arc-shaped);
FIG. 25 is a structural schematic diagram of a housing component provided in some embodiments of the present application (where a first groove portion is annular);
FIG. 26 is an isometric view of a housing component provided by some embodiments of the present application;
FIG. 27 is a schematic structural view of a housing component shown in FIG. 26 (showing a first groove portion and a second groove portion);
FIG. 28 is a sectional view in J-J direction of a housing component shown in FIG. 27;
FIG. 29 is a structural schematic diagram of a housing component provided in some embodiments of the present application (where both the first groove portion and the second groove portion are H-shaped grooves);
FIG. 30 is a sectional view in K-K direction of a housing component shown in FIG. 29;
FIG. 31 is a structural schematic diagram of a housing component provided in some embodiments of the present application (showing a first groove portion, a second groove portion, and a third groove portion);
FIG. 32 is a sectional view in M-M direction of a housing component shown in FIG. 31;
FIG. 33 is a structural schematic diagram of an end cover provided in some embodiments of the present application;
FIG. 34 is a structural schematic diagram of a housing provided by some embodiments of the present application; and
FIG. 35 is a sectional view of a housing provided in some other embodiments of the present application.

Reference numerals: 1 - shell; 11 - housing; 12 - end cover; 121 - wall portion; 121a - side wall; 121b - bottom wall; 2 - electrode assembly; 21 - positive electrode tab; 22 - negative electrode tab; 3 - positive electrode terminal; 4 - negative electrode terminal; 5 - housing component; 51 - first surface; 52 - second surface; 53 - first groove portion; 531 - first groove bottom surface; 5311 - edge line; 532 - first groove side surface; 533 - connection position; 534 - second contour line; 535 - first groove section; 536 - second groove section; 537 - third groove section; 538 - first position; 539 - second position; 54 - weak region; 55 - protrusion; 551 - first profile line; 552 - outer side surface; 553 - first end surface; 554 - arcuate surface; 56 - pressure relief region; 57 - second groove portion; 571 - groove bottom wall of the second groove portion; 58 - third surface; 59 - third groove portion; 591 - groove bottom wall of the third groove portion; 10 - battery cell; 20 - box body; 201 - first portion; 202 - second portion; 100 - battery; 200 - controller; 300 - motor; 1000 - vehicle; X - width direction of the first groove portion; Y - extension direction of the first groove portion; Z - first direction.

### DETAILED DESCRIPTION OF EMBODIMENTS

To make the objective, technical solution, and advantages of the embodiments of the present application clearer, the following will provide a clear and complete description of the technical solution in the embodiments of the present application, in conjunction with the drawings in the embodiments of the present application. Obviously, the described embodiments are only a part of the embodiments of the present application, rather than all embodiments. Based on the embodiments in the present application, all other embodiments obtained by those of ordinary skill in the art without making inventive efforts are within the scope of protection of the present application.

Unless otherwise defined, all technical and scientific terms used herein have the same meaning as understood by those skilled in the art of the relevant technical field. The terms used in the summary of the present application are used for the purpose of describing specific embodiments and are not intended to limit the present application. The terms, "comprise", "provide" and their variations, and any other variations, are intended to cover non-exclusive inclusion in the summary, the claims, and the above drawings of the present application. The terms "first", "second", and so on in the summary and claims of the present application or in the above drawings are used to distinguish between different objects and are not intended to describe a specific sequence or hierarchy.

The term "embodiment" used in the present application means that specific features, structures, or characteristics described in conjunction with the embodiments can be included in at least one embodiment of the present application. The use of the phrase in various parts of the summary does not necessarily refer to the same embodiment, nor does it imply that these embodiments are mutually exclusive or independent of each other.

In the description of the present application, it should be noted that, unless otherwise clearly stipulated and limited, the terms "provide", "interconnect", "connect", and "attach" should be understood in a broad sense. For example, it can be a fixed connection, a detachable connection, or an integral connection; and it can be a direct connection, an indirect connection through an intermediary, or an internal communication between two components. Those of ordinary skill in the art can understand the meanings of the above terms in the present application according to specific situations.

In the present application, the term "and/or" is used as a way to describe the relationship between associated objects, indicating that there can be three possible relationships. For example, "A and/or B" can represent: the presence of A, the presence of both A and B, or the presence of B. Additionally, the character "/" in the present application generally represents an "or" relationship between the preceding and following associated objects.

In the embodiments of the present application, identical reference numerals indicate the same components. For the sake of conciseness, detailed explanations of the same components are omitted in different embodiments. It should be understood that the dimensions such as thickness, length, and width of various components in the embodiments of the present application as shown in the drawings, and the overall dimensions such as thickness, length, and width of the integrated device, are provided as illustrative examples and should not be construed to limit the scope of the present application.

In the present application, the term "multiple" refers to two or more (including two).

In the embodiment of the present application, the battery cell can be a secondary battery, where the secondary battery refers to a battery cell that can be recharged to activate the active material and continue to be used after the battery cell has been discharged.

The battery cell can include lithium-ion batteries, sodium-ion batteries, sodium-lithium-ion batteries, lithium metal batteries, sodium metal batteries, lithium-sulfur batteries, magnesium-ion batteries, nickel-metal hydride batteries, nickel-cadmium batteries, lead-acid batteries, etc. The embodiment of the present application is not limited herein.

The battery cell generally includes an electrode assembly. The electrode assembly includes a positive electrode, a negative electrode, and an isolation member. During the charge and discharge process of the battery cell, active ions (such as lithium ions) are embedded and extracted back and forth between the positive electrode and the negative electrode. The isolation member is arranged between the positive electrode and the negative electrode, which can prevent short circuits between the positive and negative electrodes and allow active ions to pass through.

In some embodiments, the positive electrode can be a positive electrode sheet, and the positive electrode sheet can include a positive electrode current collector and positive electrode active material arranged on at least one surface of the positive electrode current collector.

As an example, the positive electrode current collector comprises two surfaces opposite each other in its thickness direction, and the positive electrode active material is provided on either or both of the two surfaces opposite the positive electrode current collector.

As an example, the positive electrode current collector can be made of a metal foil or composite current collector. For instance, as a metal foil, materials such as aluminum or stainless steel with silver surface treatment, stainless steel, copper, aluminum, nickel, carbon electrode, carbon, nickel, or titanium can be used. The composite current collector can include a polymer material base layer and a metal layer. The composite current collector can be formed by forming metallic materials (aluminum, aluminum alloys, nickel, nickel alloys, titanium, titanium alloys, silver and silver alloys, etc.) onto a base material of polymeric material (e.g., substrates of polypropylene, polyethylene terephthalate, polybutylene terephthalate, polystyrene, polyethylene, etc.).

As an example, the positive electrode active material can include at least one of the following materials: a lithium-containing phosphate, a lithium transition metal oxide, and respective modified compounds thereof. However, the present application is not limited to these materials, and other conventional materials that can be utilized as positive electrode active material for battery cathodes can also be used. These positive electrode active materials can be used in only one alone or a combination of more than two. The examples of lithium-containing phosphate can comprise but are not limited to, at least one of a composite of lithium iron phosphate (e.g., LiFePO₄, also referred to as LFP), lithium iron phosphate, and carbon; a composite of lithium manganese phosphate (e.g., LiMnPO₄), lithium manganese phosphate, and carbon; and a composite of lithium ferromanganese phosphate, lithium manganese iron phosphate, and carbon. The examples of the lithium transition metal oxides can comprise but are not limited to, lithium cobalt oxides (e.g., LiCoO₂), lithium nickel oxides (e.g., LiNiO₂), lithium manganese oxides (e.g., LiMnO₂, LiMn₂O₄), lithium-nickel-cobalt oxides, lithium-manganese-cobalt oxides, lithium-nickel-cobalt-manganese oxides (e.g., LiNi_{1/3}Co_{1/3}Mn_{1/3}O₂, also referred to as NCM₃₃₃; LiNi_{0.5}Co_{0.2}Mn_{0.3}O₂, also referred to as NCM₅₂₃; LiNi_{0.5}Co_{0.25}Mn_{0.25}O₂, also referred to as NCM₂₁₁; LiNi_{0.6}Co_{0.2}Mn_{0.2}O₂, also referred to as NCM₆₂₂; LiNi_{0.8}Co_{0.1}Mn_{0.1}O₂, also referred to as NCM₈₁₁); lithium-nickel-cobalt-aluminum oxides (e.g., LiNi_{0.85}Co_{0.15}Al_{0.05}O₂), and modified compounds thereof, and the like.

In some embodiments, the positive electrode can be of a foam metal. The foam metal can be nickel foam, copper foam, aluminum foam, foam alloys, or carbon foam. When the foam metal is used as the positive electrode, the surface of the foam metal can be not arranged with the positive electrode active material, although the positive electrode active material can also be provided. As an example, lithium source material, potassium metal, or sodium metal can be filled or/and deposited inside the foam metal, where the lithium source material is lithium metal and/or lithium-rich.

In some embodiments, the negative electrode can be a negative electrode sheet, and the negative electrode sheet can include a negative electrode current collector.

For example, the negative electrode current collector can be made of a metal foil, foam metal, or composite current collector. For instance, as a metal foil, materials such as aluminum or stainless steel with silver surface treatment, stainless steel, copper, aluminum, nickel, carbon electrode, carbon, nickel, or titanium can be used. Foam metals can be nickel foam, copper foam, aluminum foam, foam alloys, or carbon foam. The composite current collector can include a polymer material base layer and a metal layer. The composite current collector can be formed by forming metallic materials (copper, copper alloys, nickel, nickel alloys, titanium, titanium alloys, silver and silver alloys, etc.) onto a base material of polymeric material (e.g., substrates of polypropylene, polyethylene terephthalate, polybutylene terephthalate, polystyrene, and polyethylene).

As an example, the negative electrode sheet can include a negative electrode current collector and a negative electrode active material provided on at least one surface of the negative electrode current collector.

As an example, the negative electrode current collector comprises two surfaces opposite each other in its thickness direction, and the negative electrode active material is provided on either or both of the two surfaces opposite the negative electrode current collector.

As an example, the negative electrode active material can be a negative electrode active material known in the art for use in the battery cells. As an example, the negative electrode active material can comprise at least one of the following materials: artificial graphite, natural graphite, soft carbon, hard carbon, silicon-based materials, tin-based materials, and lithium titanate. The silicon-based materials can be selected from at least one elemental silicon, silicon oxides, silicon-carbon composites, silicon-nitrogen composites, and silicon alloys. The tin-based materials can be chosen from at least one elemental tin, tin oxides, and tin alloys. However, the present application is not limited to these materials, and other conventional materials that can be utilized as negative electrode active material for battery cathodes can also be used. The negative electrode active material can be used in only one alone or a combination of more than two.

In some embodiments, the material of the positive electrode current collector can be aluminum and the material of the negative electrode current collector can be copper.

In some implementations, the electrode assembly further comprises an isolation member, and the isolation member is provided between the positive electrode and the negative electrode.

In some embodiments, the isolation member is a separator. The present application does not impose specific restrictions on the type of separator and allows for the selection of any well-known porous structure separator with good chemical and mechanical stability.

As an example, the main material of the separator can be selected from at least one glass fiber, nonwoven fabric, polyethylene, polypropylene, polyvinylidene fluoride, and ceramic. The separator can be a single-layer film or a multi-layer composite film, with no specific limitations. When the separator is a multi-layer composite film, the materials for each layer can be the same or different, with no specific restrictions. The isolation member can be a separate component arranged between the positive and negative electrodes or can be attached to the surface of the positive and negative electrodes.

In some embodiments, the isolation member is a solid electrolyte. The solid electrolyte is arranged between the positive electrode and the negative electrode and serves both to transport ions and to isolate the positive and negative electrodes.

In some embodiments, the battery cell also includes an electrolyte, and the electrolyte conducts ions between the positive and negative electrodes. The present application does not impose specific restrictions on the type of electrolyte and allows for selection based on requirements. The electrolyte can be in a liquid state, gel state, or solid state,
wherein the liquid electrolyte includes electrolyte salts and solvents.

In some embodiments, the electrolyte salts can be selected from at least one of lithium hexafluorophosphate, lithium tetrafluoroborate, lithium perchlorate, lithium hexafluoroarsenate, lithium bis (oxalato) borate, lithium bis (trifluoromethanesulfonyl) imide, lithium trifluoromethanesulfonate, lithium difluorophosphate, lithium difluoroborate, lithium bis (oxalato) boronate, lithium bis (oxalato) phosphate, and lithium bis (trifluoromethanesulfonyl) phosphate.

In some embodiments, the solvents can be selected from at least one of ethylene carbonate, propylene carbonate, methyl acetate, diethyl carbonate, dimethyl carbonate, dipropyl carbonate, methyl propionate, ethyl propionate, butyl acetate, fluoroethylene carbonate, methyl formate, methyl acetate, ethyl acetate, propyl acetate, methyl propionate, ethyl propionate, propyl propionate, methyl butyrate, ethyl butyrate, 1,4-butanolide, γ-butyrolactone, dimethyl sulfoxide, methyl ethyl sulfoxide, and dimethyl sulfoxide. The solvent can also be selected from ether solvents. Ether solvents can include one or more of the following: ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ethers.

The gel electrolyte includes a polymer as the electrolyte framework network, combined with ionic liquid-lithium salt,

wherein the solid-state electrolyte includes polymer solid-state electrolyte, inorganic solid-state electrolyte, and composite solid-state electrolyte.

As an example, the polymer solid-state electrolyte can be polyethylene oxide (PEO), polysiloxane, polycarbonate, polyacrylonitrile, polyvinylidene fluoride, polymethyl methacrylate, single-ion polymers, polymer ionic liquids-lithium salts, and cellulose.

As an example, the inorganic solid-state electrolyte can be one or more of the following: oxide solid electrolytes (crystalline perovskite, sodium superionic conductor, garnet, amorphous LiPON thin film); sulfide solid electrolytes (crystalline lithium superionic conductors such as lithium germanium phosphorus sulfide and argyrodite, amorphous sulfides); halide solid electrolytes; nitride solid electrolytes; and hydride solid electrolytes.

As an example, the composite solid-state electrolyte is formed by adding inorganic solid-state electrolyte fillers into the polymer solid-state electrolyte.

In some embodiments, the electrode assembly is of a wound structure. The positive electrode sheet and the negative electrode sheet are wound into a wound structure.

In some embodiments, the electrode assembly is of a stacked structure.

As an example, multiple positive electrode sheets and negative electrode sheets can be provided, with the positive electrode sheets and the negative electrode sheets arranged alternately in layers.

As an example, multiple positive electrode sheets can be provided, with the negative electrode sheet folded to form multiple stacked fold segments, wherein a positive electrode sheet is sandwiched between adjacent fold segments.

As an example, both positive electrode sheets and negative electrode sheets can be folded to form multiple stacked fold segments.

As an example, multiple isolation members can be provided, each arranged between any adjacent positive electrode sheets or negative electrode sheets.

As an example, the isolation members can be continuously arranged, in a folded or wound manner, between any adjacent positive electrode sheets or negative electrode sheets.

In some embodiments, the electrode assembly can have shapes such as cylindrical, flat, or prismatic.

In some embodiments, the electrode assembly is provided with a tab, and the tab can conduct current out from the electrode assembly. The tab includes a positive tab and a negative tab.

In some embodiments, the battery cell can include a shell. The shell is configured to encapsulate the electrode assembly, electrolyte, and other components. The shell can be made of materials such as steel, aluminum, plastic (e.g., polypropylene), composite metal (e.g., copper-aluminum composite housing), or aluminum-plastic film.

As an example, the battery cell can be cylindrical battery cells, prismatic battery cells, soft pouch battery cells, or battery cells of other shapes. The prismatic cells include square battery cells, blade battery cells, and multi-prismatic battery cells; and the multi-prismatic battery cells can be, for example, hexagonal battery cells. The present application is not particularly limited herein.

The batteries mentioned in the embodiments of the present application refer to a single physical module that comprises one or multiple battery cells to provide higher voltage and capacity.

In some embodiments, the battery can be a battery module. When multiple battery cells are provided, the multiple battery cells are arranged and fixed to form a module.

In some embodiments, the battery can be a battery pack, and the battery pack includes a box body and a battery cell, wherein the battery cell or the battery module is housed within the box body.

In some embodiments, the box body can be a portion of the chassis structure of the vehicle. For instance, a portion of the box body can be at least a portion of the floor of the vehicle, or a portion of the box body can be at least a portion of the crossbeam and longitudinal beam of the vehicle.

In some embodiments, the battery can be an energy storage device. The energy storage device includes storage containers, energy storage cabinets, and the like.

The battery mentioned in the embodiments of the present application can include a single physical module that includes one or multiple battery cells to provide higher voltage and capacity. When multiple battery cells are provided, the multiple battery cells are connected in series, in parallel, or hybrid using the busbar components.

In some embodiments, the battery can be a battery module. When multiple battery cells are provided, the multiple battery cells are arranged and fixed to form a module.

In some embodiments, the battery can be a battery pack, and the battery pack includes a box body and a battery cell, wherein the battery cell or the battery module is housed within the box body.

In some embodiments, the box body can be of a portion of the chassis structure of the vehicle. For instance, a portion of the box can be at least a portion of the floor of the vehicle, or a portion of the box can be at least a portion of the crossbeam and longitudinal beam of the vehicle.

In some embodiments, the battery can be an energy storage device. The energy storage device includes storage containers, energy storage cabinets, and the like.

The development of battery technology needs to consider multiple design factors simultaneously, such as energy density, discharge capacity, cycle life, charge-discharge rates, and other performance parameters. Additionally, the reliability of the battery also needs to be taken into consideration.

In a battery cell, the shell of the battery cell can be provided with a pressure relief mechanism, and the pressure relief mechanism releases the internal pressure of the battery cell during thermal runaway of the battery cell, thus improving the reliability of the battery cell.

For a typical battery cell, the pressure relief mechanism is welded to the shell to fix the pressure relief mechanism on the shell. Taking the pressure relief mechanism as an explosion-proof diaphragm arranged on the end cover of the shell as an example, when thermal runaway occurs in the battery cell, the explosion-proof diaphragm is destroyed to release the internal pressure of the battery cell. Since the pressure relief mechanism is welded to the shell, cracks may form at the welding position during long-term use of the battery cell, which reduces the strength of the welding position. It is easy for the welding position to be destroyed when the internal pressure of the battery cell does not reach the bursting pressure of the pressure relief mechanism, thus leading to the failure of the pressure relief mechanism and lowering the reliability of the pressure relief mechanism.

To improve the reliability of the pressure relief mechanism, the pressure relief mechanism can be designed as an integrally molded structure with the shell, wherein a portion of the shell serves as the pressure relief mechanism. For instance, a weakening treatment can be applied to the end cover of the shell or a local part of the housing, thus reducing the strength of the local part of the housing to form a weak region, so that an integrated pressure relief mechanism is formed. This can effectively enhance the reliability of the pressure relief mechanism.

The applicants observed that after forming the integrated pressure relief mechanism on the shell, the mechanical properties of the weak region of the shell were relatively poor. Under normal operating conditions of the battery cell, the weak region is prone to fatigue failure due to long-term internal pressure variations of the battery cell, which can affect the service life of the battery cell.

In view of this, the embodiment of the present application provides a housing component. The housing component includes a first surface and a second surface, wherein the first surface and the second surface are oppositely arranged along a first direction. The housing component is provided with a first groove portion recessed from the first surface in a direction proximate to the second surface. The housing component forms a weak region at the bottom of the first groove portion, and the weak region is configured to be damaged when the battery cell releases internal pressure. Along the first direction, a protrusion protruding from the second surface is arranged on a side of the weak region away from the first groove portion.

In the housing component, the protrusion protruding from the second surface is arranged on a side of the weak region away from the first groove portion. The protrusion strengthens the weak region, which improves the fatigue strength of the weak region and reduces the risk of the weak region being damaged during the normal use of the battery cell, thereby improving the service life of the battery cell.

The housing component provided in the embodiments of the present application are applicable to the battery cells, batteries, and electric devices that utilize the batteries.

The electric device can include vehicles, mobile phones, portable devices, laptops, ships, spacecraft, electric toys, electric tools, and more. Vehicles can be gasoline cars, gas cars, or new energy vehicles. New energy vehicles can include pure electric vehicles, hybrid vehicles, or extended-range vehicles. Aerospace vehicles comprise airplanes, rockets, spaceplanes, and spacecraft, among others. Electric toys include stationary or mobile electric toys, for example, video game consoles, electric car toys, electric boat toys, and electric airplane toys. Electric tools include metal cutting electric tools, grinding electric tools, assembly electric tools, and railway electric tools, for example, electric drills, electric sanders, electric wrenches, electric screwdrivers, electric hammers, impact drills, concrete vibrators, and electric planers. The embodiments of the present application do not impose any specific restrictions on the aforementioned electrical equipment.

The following embodiments are explained using the example of vehicles as the electrical equipment for the sake of convenience.

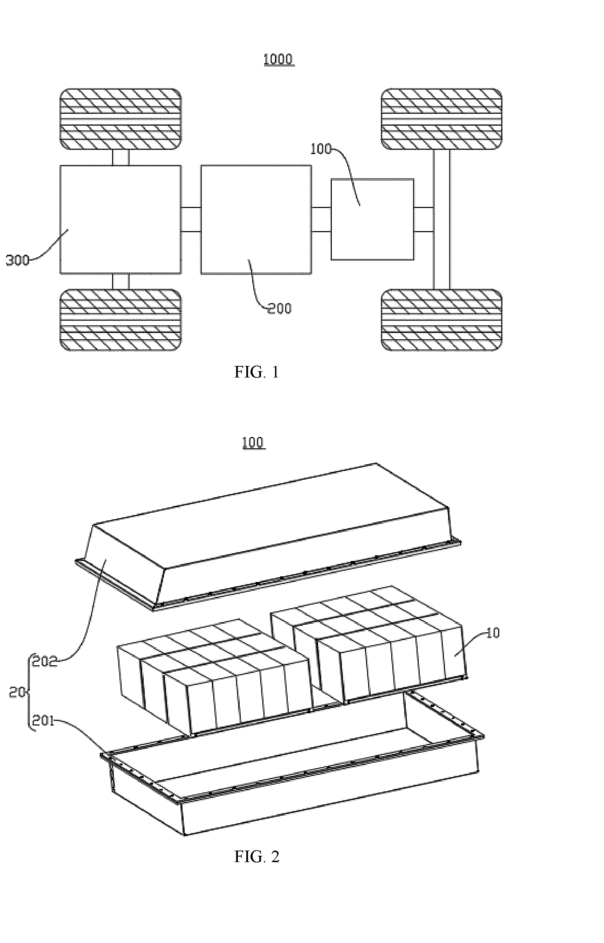

Referring to FIG. 1, FIG. 1 is a schematic diagram of a structure of a vehicle 1000 provided in some embodiments of the present application. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can be the operational power source for the vehicle 1000.

Additionally, the vehicle 1000 also comprises a controller 200 and a motor 300. The controller 200 is configured to manage the supply of power from the battery 100 to the motor 300, for example, for working power requirements for starting, navigating, and driving the vehicle 1000.

In some embodiments of the present application, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG. 2, FIG. 2 is an exploded view of a battery 100 provided in some embodiments of the present application. The battery 100 includes a battery cell 10 and a box body 20, wherein the box body 20 is configured to contain the battery cell 10.

The box body 20 is a component that houses the battery cell 10, and the box body 20 provides a placement space for the battery cell 10. The box body 20 can have various structures. In some embodiments, the box body 20 can include a first portion 201 and a second portion 202, wherein the first portion 201 and the second portion 202 are capped with each other to define the placement space configured to accommodate the battery cell 10. The first portion 201 and the second portion 202 can have various shapes, such as rectangular and cylindrical. The first portion 201 can be a hollow structure open on one side, and the second portion 202 can also be a hollow structure open on one side. The open side of the second portion 202 can be capped over the open side of the first portion 201, thereby forming a box body 20 with a placement space. It is also possible for the first portion 201 to be a hollow structure open on one side, and the second portion 202 to be a plate-like structure. The second portion 202 can be capped over the open side of the first portion 201, thereby forming a box body 20 with a placement space. As an example, the battery cell 10 can be cylindrical battery cells 10, prismatic battery cells 10, soft pouch battery cells 10, or battery cells 10 of other shapes. The prismatic battery cells 10 include square battery cells 10, blade battery cells 10, and multi-prismatic batteries 100; and the multi-prismatic batteries 100 can be, for example, hexagonal batteries 100. The present application is not particularly limited herein.

In the battery 100, the battery cell 10 can be one or multiple. If multiple battery cells 10 are provided, the multiple battery cells 10 can be connected in series, parallel, or hybrid. Hybrid connection refers to having both series and parallel connections among multiple battery cells 10. The multiple battery cells 10 can be first connected in series, parallel, or hybrid to form battery modules, and then the multiple battery modules can be connected in series, parallel, or hybrid to form a whole, which is accommodated in the box body 20. Alternatively, all battery cells 10 can be directly connected in series, parallel, or hybrid, and the whole formed by all the battery cells 10 is then accommodated in the box body 20.

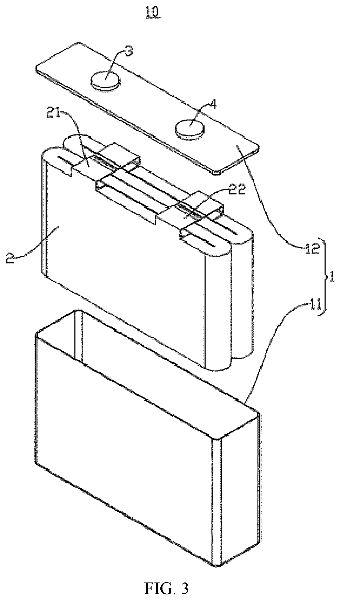

Referring to FIG. 3, FIG. 3 is an exploded view of a battery cell 10 provided in some embodiments of the present application. The battery cell 10 can include a shell 1 and an electrode assembly 2.

The shell 1 is a component configured to accommodate the electrode assembly 2 and the electrolyte. The shell 1 can be made of materials such as steel, aluminum, plastic (e.g., polypropylene), composite metal (e.g., copper-aluminum composite shell 1), or aluminum-plastic film. As an example, the shell 1 can include a housing 11 and an end cover 12.

The housing 11 can be a hollow structure with an opening formed at one end, or the housing 11 can be a hollow structure with openings formed at two opposite ends. The material of the housing 11 can be diverse, such as copper, iron, aluminum, steel, and aluminum alloy.

The end cover 12 is a component that seals the opening of the housing 11, thereby isolating the internal environment of the battery cell 10 from the external environment. The end cover 12, together with the housing 11, defines a containment space configured to accommodate the electrode assembly 2, electrolyte, and other components. The end cover 12 can be connected to the housing 11 in the manner of welding or crimping to seal the opening of the housing 11. The shape of the end cap 12 can be adapted to the shape of the shell 1, for example, if the housing 11 is a cuboid structure, the end cover 12 can be a rectangular plate-like structure that fits with the shell 1. Similarly, if the housing 11 is cylindrical, the end cover 12 can be a circular plate-like structure that fits with the housing 11. The material of the end cover 12 can also be diverse, including copper, iron, aluminum, steel, aluminum alloy, and more.

In the battery cell 10, there can be one or two end covers 12. In embodiments where the housing 11 has an open-ended hollow structure at both ends, two end covers 12 can correspondingly be arranged. These two end covers 12 respectively seal the two openings of the housing 11; and together with the housing 11, the two end covers 12 define the containment space. In embodiments where the housing 11 has an open-ended hollow structure at one end, one end cover 12 can correspondingly be arranged. The end cover 12 seals the openings of one side of the housing 11; and together with the housing 11, the end cover 12 defines the containment space.

In some embodiments, the battery cell 10 can also include electrode terminals, wherein the electrode terminals are arranged on the shell 1. The electrode terminals are configured to establish electrical connections with the tabs of the electrode assembly 2, thus enabling the output of electrical energy from the battery cell 10. The electrode terminals can be directly connected to the tabs, for example, by direct welding the electrode terminals to the tabs. Alternatively, the electrode terminals can be indirectly connected, for example, the electrode terminals and the tabs are connected indirectly via a current collector. The current collector can be a metallic conductor, such as copper, iron, aluminum, steel, aluminum alloy, etc.

As an example, shown in FIG. 3, the housing 11 is a hollow structure with an opening formed at one end, wherein the end cover 12 seals the opening of the housing 11. Two electrode terminals can be arranged on the end cover 12. The two electrode terminals are the positive electrode terminal 3 and the negative electrode terminal 4, respectively. The positive electrode terminal 3 is electrically connected to the positive tab 21 of the electrode assembly 2, and the negative electrode terminal 4 is electrically connected to the negative tab 22 of the electrode assembly 2.

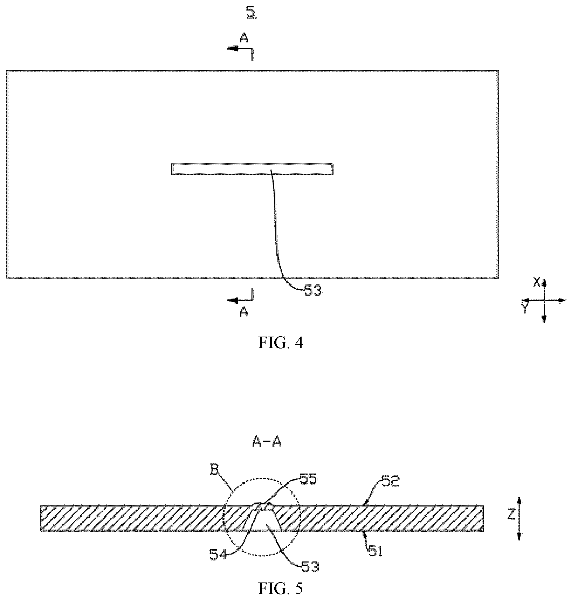

Referring to FIGS. 4 and 5, FIG. 4 is a structural schematic diagram of a housing component 5 provided in some embodiments of the present application, and FIG. 5 is a sectional view in A-A direction of a housing component 5 shown in FIG. 4. The embodiment of the present application provides a housing component 5 for a battery cell 10. The housing component 5 includes a first surface 51 and a second surface 52, wherein the first surface 51 and the second surface 52 are oppositely arranged along a first direction Z. The housing component 5 is provided with a first groove portion 53 recessed from the first surface 51 in a direction proximate to the second surface 52. The housing component 5 forms a weak region 54 at the bottom of the first groove portion 53, and the weak region 54 is configured to be damaged when the battery cell 10 releases internal pressure. Along the first direction Z, a protrusion 55 protruding from the second surface 52 is arranged on a side of the weak region 54 away from the first groove portion 53.

The housing component 5 is a part capable of jointly accommodating the electrode assembly 2 with other components. The housing component 5 can be part of the shell 1 of the battery cell 10, the end cover 12 of the housing 1 can be the housing component 5, and the housing 11 of the shell 1 can be the housing component 5. The housing component 5 can be made of metal materials such as copper, iron, aluminum, steel, and aluminum alloy. The housing component 5 can also be the shell of the battery cell 10. For instance, the housing component 5 can be an aluminum-plastic film, where the aluminum-plastic film wraps around the electrode assembly 2 to form a soft pouch battery.

The first surface 51 and the second surface 52 are two opposite surfaces of the housing component 5. Both the first surface 51 and the second surface 52 can be planar, and the first surface 51 can be parallel to the second surface 52. The first surface 51 or the second surface 52 faces the interior of the battery cell 10, and the other is backed away from the interior of the battery cell 10. Taking the housing component 5 as the end cover 12 as an example, the first direction Z is the thickness direction of the end cover 12, the first surface 51 and the second surface 52 can be the surfaces of the end cover 12 that are farthest apart along the thickness direction, and the distance between the first surface 51 and the second surface 52 is the thickness of the end cover 12. Of course, the distance between the first surface 51 and the second surface 52 can also be less than the thickness of the end cover 12. Taking the housing component 5 as the housing component 11 as an example, the first direction Z is a wall thickness direction of the housing 11, the first surface 51 and the second surface 52 can be the surfaces of a wall portion of the housing 11 that are farthest apart along the thickness direction, and the distance between the first surface 51 and the second surface 52 is the thickness of the wall portion. Of course, the distance between the first surface 51 and the second surface 52 can also be less than the thickness of the wall portion 121.

As an example, in the embodiment shown in FIG. 5, the first surface 51 and the second surface 52 are respectively located on two sides of the end cover 12, and the distance between the first surface 51 and the second surface 52 is the thickness of the end cover 12. The first surface 51 is the outer surface of the end cover 12, and the second surface 52 is the inner surface of the end cover 12, with the inner surface of the end cover 12 facing the interior of the battery cell 10.

Along the first direction Z, the first groove portion 53 is recessed from the first surface 51 toward the second surface 52, and the first direction Z is the depth direction of the first groove portion 53. The first groove portion 53 can be formed by various methods, such as stamping, laser etching, milling, etc. The first groove portion 53 can be of various shapes, such as a straight groove, circular groove, elliptical groove, annular groove, arc groove, U-shaped groove, and H-shaped groove, wherein a circular groove refers to a groove with a circular cross-section, and an elliptical groove refers to a groove with an elliptical cross-section. The cross-section is perpendicular to the first direction Z. As an example, in the embodiments shown in FIGS. 4 and 5, the first groove portion 53 is a linear groove.

The weak region 54 is formed at the bottom of the first groove portion 53. Along the first direction Z, the portion of the housing component 5 located between the groove bottom surface of the first groove portion 53 and the second surface 52 is the weak region 54. The weak region 54 is thinner than other regions of the housing component 5. After forming the first groove portion 53 on the housing component 5, the region of the housing component 5 where the first groove portion 53 is arranged becomes thinner, thereby forming the corresponding weak region 54. The housing component 5 further includes a non-weak region surrounding the outer side of the first groove portion 53. It is understood that the weak region 54 and the non-weak region are integrally molded. The strength of the weak region 54 is less than the strength of the non-weak region. The weak region 54 can be damaged by rupturing, detaching, or other means. For example, when the internal pressure of the battery cell 10 reaches a threshold, the weak region 54 ruptures under the action of the discharge materials (such as gases, electrolytes, etc.) inside the battery cell 10, thus allowing the internal discharge materials of the battery cell 10 to be discharged smoothly.

The protrusion 55 protrudes from the second surface 52 and is connected to the weak region 54. The protrusion 55 and the weak region 54 can be integrally molded, and the protrusion 55 and the weak region 54 can be separately provided and connected. For example, the protrusion 55 and the weak region 54 are welded. The protrusion 55 reinforces the weak region 54. The protrusion 55 can cover a portion of the weak region 54 or completely cover the weak region 54. The protrusion 55 can be continuous and extend along the extension direction of the weak region 54. For example, if the first groove portion 53 is a linear groove, the weak region 54 extends along a linear trajectory, and the protrusion 55 also extends along the linear trajectory. For example, if the first groove portion 53 is an arc-shaped groove, the weak region 54 extends along an arc trajectory, and the protrusion 55 also extends along the arc trajectory. Of course, the protruding portion 55 can also be discontinuous. For example, the protrusion 55 can include multiple segments, and the multiple segments are arranged at intervals along the extension direction Y of the first groove portion 53.

In the embodiment of the present application, the protrusion 55 protruding from the second surface 52 is arranged on a side of the weak region 54 away from the first groove portion 53. The protrusion 55 strengthens the weak region 54, which improves the fatigue strength of the weak region 54 and reduces the risk of the weak region 54 being damaged during the normal use of the battery cell 10, thereby improving the service life of the battery cell 10.

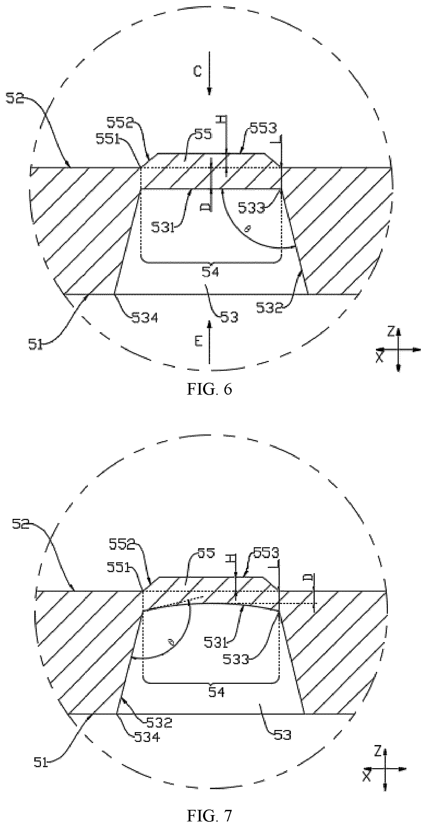

In some embodiments, referring to FIGS. 6 and 7, FIG. 6 is a partially enlarged view of a housing component 5 at location B shown in FIG. 5 (where a first groove bottom surface 531 is planar); and FIG. 7 is a partially enlarged view of a housing component 5 provided in some embodiments of the present application (where a first groove bottom surface 531 is an arcuate surface 554). In some embodiments, along the first direction Z, the first groove portion 53 includes a first groove bottom surface 531 located between the first surface 51 and the second surface 52. A minimum distance between the first groove bottom surface 531 and the second surface 52 is D, and a height of the protrusion 55 protruding from the second surface 52 is H, satisfying a condition: 0.01 ≤ H/(D+H) ≤ 0.67.

The groove bottom surface of the first groove portion 53 is the first groove bottom surface 531. The first groove bottom surface 531 can be a plane. The first groove bottom surface 531 can be parallel to the second surface 52 or arranged at a small angle, for example, the angle between the first groove bottom surface 531 and the second surface 52 can be within 10 degrees. The first groove bottom surface 531 can also be a curved surface, for instance, the first groove bottom surface 531 can be an arcuate surface 554 with a cross-section in the shape of an arc, where the cross-section is perpendicular to the extension direction Y of the first groove portion (as shown in FIG. 4).

The minimum distance D between the first groove bottom surface 531 and the second surface 52 is the minimum thickness of the weak region 54 in the first direction Z. The height H of the protrusion 55 protruding from the second surface 52 is the maximum thickness of the protrusion 55 in the first direction Z.

As an example, in the embodiment shown in FIG. 6, the first groove bottom surface 531 is a plane, the first groove bottom surface 531 is parallel to the second surface 52, and the thickness of the weak region 54 is uniform. In the embodiment shown in FIG. 7, the first groove bottom surface 531 is an arcuate surface 554. The distance D is a distance from the position of the first groove bottom surface 531 closest to the second surface 52 along the first direction Z to the second surface 52. The thickness of the weak region 54 is non-uniform. Along the width direction X of the first groove portion, the thickness of the weak region 54 increases gradually from the middle toward the two ends.

The ratio H/(D+H) can be the point value of any one of 0.01, 0.02, 0.03, 0.05, 0.1, 0.15, 0.2, 0.25, 0.3, 0.33, 0.35, 0.4, 0.45, 0.5, 0.52, 0.55, 0.6, 0.65, or 0.67, or any range of values between any two of the values.

The applicants conducted multiple groups of experiments on battery cells 10 using the end cover 12 as the housing component 5. The cracking rate of the weak region 54 under normal operating conditions of the battery cells 10 and the explosion rate of the battery cells 10 during thermal runaway in each group are statistically analyzed. The test results are shown in Table 1.

(1) The cracking rate of the weak region 54 under normal operating conditions of the battery cell 10 was measured as follows.

The battery cells 10 were placed under conditions of 25 ± 2°C and subjected to charge-discharge cycling within a state-of-charge (SOC) range of 5%-97%. The internal aerosis pressure of the battery cells 10 was monitored during 1,000 trials. The test was terminated when either the life of the battery cell 10 decreased to 80% state-of-health (SOH) or the weak region 54 of the battery cell 10 in any group cracked during the cycling process. The cracking of the weak region 54 was determined if the internal pressure of the battery cell 10 decreased by more than 10% of the maximum pressure. The cracking rate of the weak region 54 was calculated as follows: cracking rate = number of cracked samples / total number of samples * 100%.

(2) The explosion rate of the battery cells 10 during thermal runaway was measured as follows.

A small heating film was arranged inside each battery cell 10. The heating film was powered to heat the battery cells 10 until thermal runaway of the battery cells 10 occurred. Observations were made to determine whether the battery cells 10 exploded. The test was repeated 1,000 times, and the explosion rate of the battery cells 10 was calculated as follows: explosion rate = number of exploded samples / total number of samples * 100%.

**Table 1**

| Group number | D (mm) | H (mm) | H/(D+H) | Cracking rate (%) | Explosion rate (%) |
|---|---|---|---|---|---|
| 1 | 1.99 | 0.01 | 0.005 | 7.2% | 6% |
| 2 | 1.98 | 0.02 | 0.01 | 6% | 8% |
| 3 | 1.47 | 0.03 | 0.02 | 4% | 10% |
| 4 | 1.3 | 0.04 | 0.03 | 3% | 11.2% |
| 5 | 0.54 | 0.06 | 0.1 | 2% | 12% |
| 6 | 0.8 | 0.2 | 0.2 | 1% | 13.2% |
| 7 | 0.67 | 0.33 | 0.33 | 0.8% | 14% |
| 8 | 0.75 | 0.5 | 0.4 | 0.5% | 18% |
| 9 | 0.48 | 0.52 | 0.52 | 0.4% | 21% |
| 10 | 0.33 | 0.67 | 0.67 | 0.3% | 23% |
| 11 | 0.3 | 0.7 | 0.7 | 0.1% | 25.5% |

According to Table 1, when H/(D+H) > 0.67, the strength of the weak region 54 becomes excessively high, making it difficult for the weak region 54 to be damaged during the thermal runaway of the battery cell 10, which can result in delayed pressure relief and increase the probability of battery cell 10 explosion; and the probability of the battery cell 10 explosion during thermal runaway is greater than 25%. When H/(D+H) < 0.01, the strengthening capability of the protrusion 55 on the weak region 54 is insufficient, which increases the risk of the weak region 54 being damaged during the normal use of the battery cell 10. The cracking rate of the weak region 54 under normal operating conditions of the battery cells 10 is greater than 7%. With 0.01 ≤ H/(D+H) ≤ 0.67, the risk of the weak region 54 being damaged during the normal use of the battery cell 10 can be further reduced, the service life of the battery cell 10 can be improved, the risk of explosion during thermal runaway of the battery cell 10 can be reduced, and the reliability of the battery cell 10 can be enhanced.

In some embodiments, 0.03 ≤ H/(D+H) ≤ 0.33.

The ratio H/(D+H) can be the point value of any one of 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0. 29, 0.3, 0.31, 0.32, 0.33, or any range of values between any two of the values.

As can be seen from Table 1, when 0.03≤H/(D+H)≤0.33, it enables the comprehensive performance of the housing component 5 to be better, thus ensuring that the weak region 54 can be damaged in time during the thermal runaway of the battery cell 10. This also provides sufficient fatigue strength for the weak region 54 under normal usage conditions of the battery cell 10, thereby improving the service life of the battery cell 10.

In some embodiments, along the first direction Z, the height of the protrusion 55 protruding from the second surface 52 is H, satisfying a condition: 0.01mm ≤ H ≤ 0.96mm.

H can be the point value of any one of 0.01mm, 0.03mm, 0.05mm, 0.1mm, 0.3mm, 0.55mm, 0.6mm, 0.7mm, 0.9mm, 0.96mm, or any range of values between any two of the values.

In the embodiment, 0.01mm≤H≤0.96mm, this ensures that the protrusion 55 provides a good strengthening effect on the weak region 54. The height of the protrusion 55 is not too high, thereby reducing the space occupied by the protrusion 55 on the outside or inside of the battery cell 10. Of course, if the protrusion 55 is located inside the battery cell 10, setting the height of the protrusion 55 within a reasonable range can reduce the space occupied by the protrusion 55 inside the battery cell 10. If the protrusion 55 is located outside the battery cell 10, setting the height of the protrusion 55 within a reasonable range can reduce the space occupied by the protrusion 55 outside the battery cell 10.

In some embodiments, 0.05mm≤H≤0.55mm.

H can be the point value of any one of 0.05mm, 0.07mm, 0.09mm, 0.1mm, 0.13mm, 0.15mm, 0.17mm, 0.19mm, 0.21mm, 0.23mm, 0.25mm, 0.27mm, 0.29mm, 0.3mm, 0.31mm, 0.33mm, 0.35mm, 0.37mm, 0.39mm 0.41mm, 0.43mm, 0.45mm, 0.47mm, 0.49mm, 0.51mm, 0.53mm, 0.55mm, or any range of values between any two of the values.

In the embodiment, 0.05mm≤H≤0.55mm, this further reduces the space occupied by the protrusion 55 on the outside or inside of the battery cell 10 and enhances the strengthening effect of the protrusion 55 on the weak region 54.

In some embodiments, referring to FIGS. 6 and 7, the first groove portion 53 includes a first groove bottom surface 531 and a first groove side surface 532 connected to the first groove bottom surface 531. An angle between the first groove side surface 532 and the first groove bottom surface 531 is θ with a unit of degree. The first groove side surface 532 is connected to the first groove bottom surface 531 at a connection position 533. Along the first direction Z, a minimum residual thickness of the housing component 5 at the connection position 533 is L with a unit of mm, satisfying a condition: 90 ≤ θ/L ≤ 5833.

The ratio θ/L can be the point value of any one of 90, 100, 111, 200, 220, 300, 400, 500, 600, 650, 700, 800, 900, 933, 1200, 1500, 2000, 2500, 3200, 4000, 5000, 5833, or any range of values between any two of the values.

The first groove side surface 532 is connected to the edge of the first groove bottom surface 531. In the width direction X of the first groove portion, the first groove portion 53 has two opposing first groove side surfaces 532, with the two first groove side surfaces 532 respectively connected to both sides of the first groove bottom surface 531. The angle θ formed between the first groove side surface 532 and the first groove bottom surface 531 is the angle formed within the same cross-section by the first groove side surface 532 and the first groove bottom surface 531, where the cross-section is perpendicular to the extension direction Y of the first groove portion.

The first groove side surface 532 and the first groove bottom surface 531 are connected at the edge of the first groove bottom surface 531, and the edge line 5311 of the first groove bottom surface 531 (not shown in FIG. 6 and FIG. 7) is the connection position 533 between the first groove bottom surface 531 and the first groove side surface 532. Along the first direction Z, the minimum residual thickness L of the housing component 5 at the connection position 533 is the thickness of the remaining portion of the housing component 5 at the connection position 533 after the first groove portion 53 is provided. The minimum residual thickness L can be measured at the edge line 5311 of the first groove bottom surface 531.

It should be noted that, as shown in FIG. 7, in the embodiment where the first groove bottom surface 531 is an arcuate surface 554, the angle θ between the first groove bottom surface 531 and the first groove side surface 532 is the angle formed between the tangent of the first groove bottom surface 531 at the connection position 533 and the first groove side surface 532.

The applicants conducted multiple groups of experiments on battery cells 10 using the end cover 12 as the housing component 5, where θ/ L differed in multiple groups of experiments. The cracking rate of the weak region 54 under normal operating conditions of the battery cells 10 and the explosion rate of the battery cells 10 during thermal runaway in each group are statistically analyzed. The test results are shown in Table 2.

**Table 2**

| Group number | θ (degrees) | L (mm) | θ/ L | Cracking rate | Explosion rate |
|---|---|---|---|---|---|
| 1 | 176 | 0.02 | 8800 | 6.5% | 7.4% |
| 2 | 175 | 0.03 | 5833 | 5% | 6% |
| 3 | 160 | 0.05 | 3200 | 4% | 5.5% |
| 4 | 150 | 0.1 | 1500 | 2% | 5% |
| 5 | 140 | 0.15 | 933 | 1% | 4% |
| 6 | 130 | 0.2 | 650 | 0.7% | 3% |
| 7 | 120 | 0.3 | 400 | 0.1% | 2% |
| 8 | 110 | 0.5 | 220 | 1.7% | 4% |
| 9 | 100 | 0.9 | 111 | 2.4% | 5% |
| 10 | 90 | 1 | 90 | 3.8% | 6% |
| 11 | 89 | 1.2 | 74 | 6.5% | 7.4% |

According to Table 2, when θ/L > 5833, both the cracking rate of the weak region 54 under normal operating conditions of the battery cell 10 and the explosion rate of the battery cell 10 during thermal runaway are relatively high. When θ/L < 90, both the cracking rate of the weak region 54 under normal operating conditions of the battery cell 10 and the explosion rate of the battery cell 10 during thermal runaway are also relatively high. However, when 90 ≤ θ/L ≤ 5833, both the cracking rate of the weak region 54 under normal operating conditions of the battery cell and the explosion rate of the battery cell 10 during thermal runaway are relatively low. This improves the service life of the battery cell 10, reduces the risk of explosion during thermal runaway of the battery cell 10, and enhances the reliability of the battery cell.

In some embodiments, 220≤θ/L≤933.

The ratio θ/L can be the point value of any one of 220, 300, 350, 400, 450, 500, 550, 600, 650, 700, 750, 800, 850, 900, 933, or any range of values between any two of the values.

According to Table 2, when 220 ≤ θ/L ≤ 933, both the cracking rate of the weak region 54 under normal operating conditions of the battery cell 10 and the explosion rate of the battery cell 10 during thermal runaway are further reduced. This further improves the service life of the battery cell 10, and enhances the reliability of the battery cell 10.

In some embodiments, 90°≤θ≤175°.

θ can be the point value of any one of 90°, 95°, 100°, 105°, 110°, 115°, 120°, 125°, 130°, 135°, 140°, 145°, 150°, 155°, 160°, 165°, 170°, 175°, or any range of values between any two of the values.

In some embodiments, 0.03mm≤L≤1mm.

L can be the point value of any one of 0.03 mm, 0.04 mm, 0.05 mm, 0.06 mm, 0.07 mm, 0.08 mm, 0.09 mm, 0.1 mm, 0.15 mm, 0.2 mm, 0.25 mm, 0.3 mm, 0.35 mm, 0.4 mm, 0.45 mm, 0.5 mm, 0.6 mm, 0.7 mm, 0.8 mm, 0.9 mm 0.8 mm, 0.9 mm, or any range of values between any two of the values.

In some embodiments, referring to FIGS. 6 to 8, FIG. 8 is a view along direction C of a housing component 5 shown in FIG. 6. Along the first direction Z, the first groove portion 53 includes a first groove bottom surface 531 located between the first surface 51 and the second surface 52. The outer surface of the protrusion 55 connects with the second surface 52 to form a first profile line 551, and the projection of the first profile line 551 along the first direction Z is located within the first groove bottom surface 531.

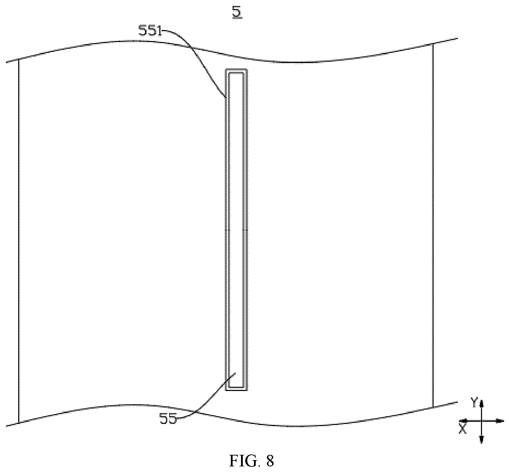

The connection position between the outer surface of the protrusion 55 and the second surface 52 forms the first profile line 551. For example, as shown in FIGS. 6 and 7, the outer surface of the protrusion 55 includes an outer side surface 552 and a first end surface 553 away from the second surface 52 along the first direction Z. The outer side surface 552 surrounds the first end surface 553, and the outer side surface 552 is connected to the second surface 52 of the first end surface 553. The connection position of the outer side surface 552 with the second surface 52 forms the first profile line 551. As shown in FIG. 8, the protrusion 55 extends linearly, and the first profile line 551 is rectangular.

The first end surface 553 can be perpendicular to the outer side surface 552 or form an obtuse angle. As an example, in the embodiments shown in FIGS. 6 and 7, the first end surface 553 forms an obtuse angle with the outer side surface 552.

The first groove portion 53 forms a second profile line 534 on the first surface 51. For example, along the first direction Z, the projection of the first groove bottom surface 531 is located within the second profile line 534 and does not contact the second profile line 534.

In some embodiments, the projection of the first profile line 551 along the first direction Z is located within the first groove bottom surface 531. This reduces the coverage of the protrusion 55 on the weak region 54, making it easier for the weak region 54 to be damaged during the thermal runaway of the battery cell 10 and allowing for timely pressure relief of the internal pressure of the battery cell 10.

In some embodiments, in combination with FIG. 6 to FIG. 9, FIG. 9 is a view along direction E of a housing component 5 shown in FIG. 6. The projection of the first profile line 551 along the first direction Z coincides with an edge line 5311 of the first groove bottom surface 531 within the first groove bottom surface 531.

In the embodiments shown in FIGS. 6 and 7, the minimum distance between the edge line 5311 of the first groove bottom surface 531 and the second surface 52 along the first direction Z is the minimum residual thickness L of the housing component 5 at the connection position 533. In the embodiment shown in FIG. 6, L = D; and in the embodiment shown in FIG. 7, L > D.

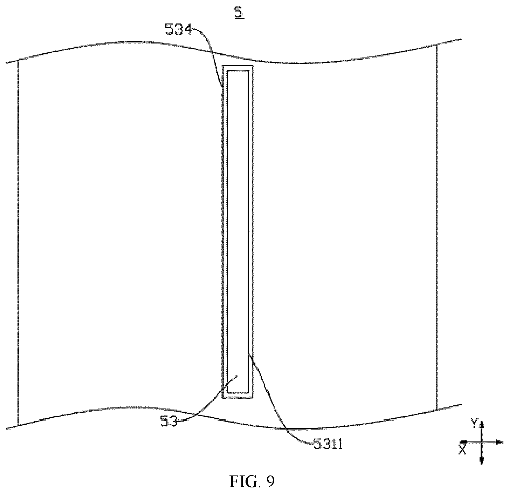

As shown in FIG. 9, taking the first groove bottom surface 531 as a rectangle as an example, the four edges of the rectangle collectively form the edge line 5311 of the first groove bottom surface 531.

In the embodiment, the protrusion 55 completely covers the weak region 54 so that the protrusion 55 provides a good strengthening effect on the weak region 54. Thus, the fatigue strength of the weak region 54 is increased, and the risk of the weak region 54 being damaged during normal use of the battery cell 10 is reduced. Additionally, the weak region 54 at the edge line 5311 of the first groove bottom surface 531 is weaker, making it easier for the weak region 54 to be damaged during the thermal runaway of the battery cell 10.

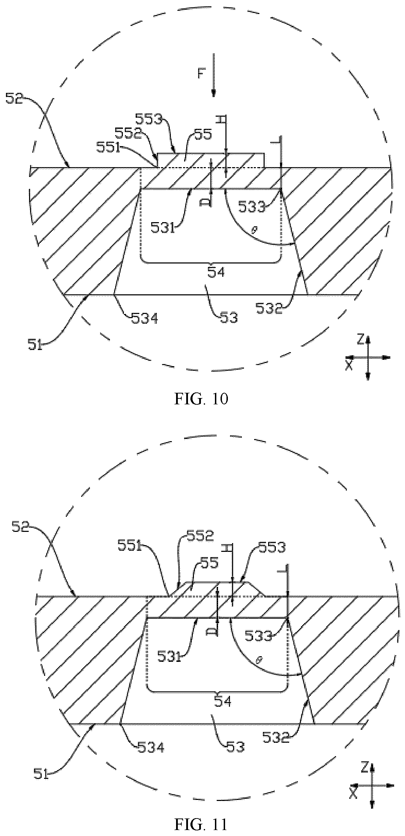

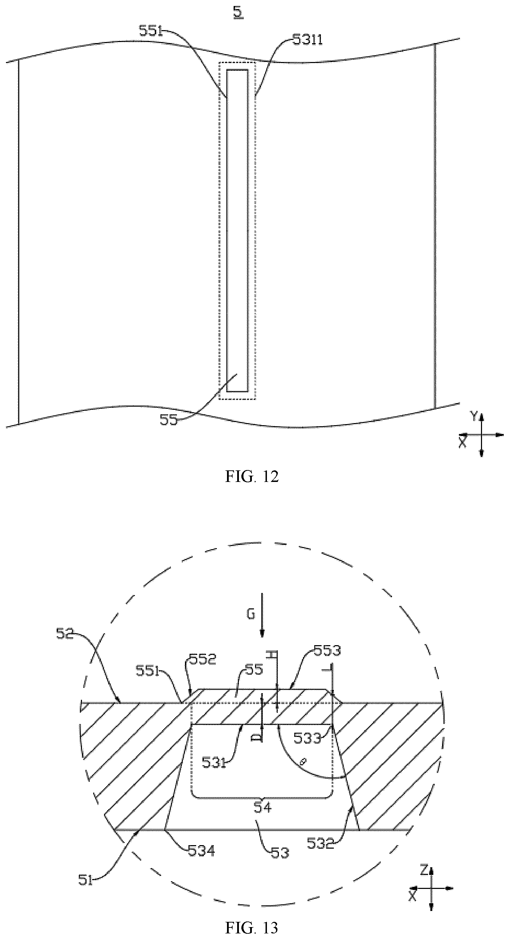

In some embodiments, referring to FIGS. 10 to 12, FIG. 10 is a partially enlarged view of a housing component 5 provided in some embodiments of the present application (where a projection of a first profile line 551 within a first groove bottom surface 531 does not contact an edge line 5311 of a first groove bottom surface 531); FIG. 11 is a partially enlarged view of a housing component 5 provided in other embodiments of the present application (where a projection of a first profile line 551 within a first groove bottom surface 531 does not contact an edge line 5311 of a first groove bottom surface 531); and FIG. 12 is a view along direction F of a housing component 5 shown in FIG. 10. The projection of the first profile line 551 along the first direction Z does not contact with the edge line 5311 of the first groove bottom surface 531 within the first groove bottom surface 531.

It can be understood that within the first groove bottom surface 531, the projection of the first profile line 551 along the first direction Z is located on the inner side of the edge line 5311 of the first groove bottom surface 531.

For example, as shown in FIGS. 10 and 11, the minimum distance between the edge line 5311 of the first groove bottom surface 531 and the second surface 52 along the first direction Z is the minimum residual thickness L of the housing component 5 at the connection position 533, L=D. In the embodiment shown in FIG. 10, the first end surface 553 of the protrusion 55 is perpendicular to the outer side surface 552. In the embodiment shown in FIG. 11, the first end surface 553 of the protrusion 55 forms an obtuse angle with the outer side surface 552.

As an example, as shown in FIG. 12, both the first profile line 551 and the edge line 5311 are rectangular.

In the embodiment, the weak region 54 has a region that is not covered by the protrusion 55. The region has a thinner thickness and is more easily damaged during the thermal runaway of the battery cell 10, thus improving the timely pressure relief of the battery cell 10.

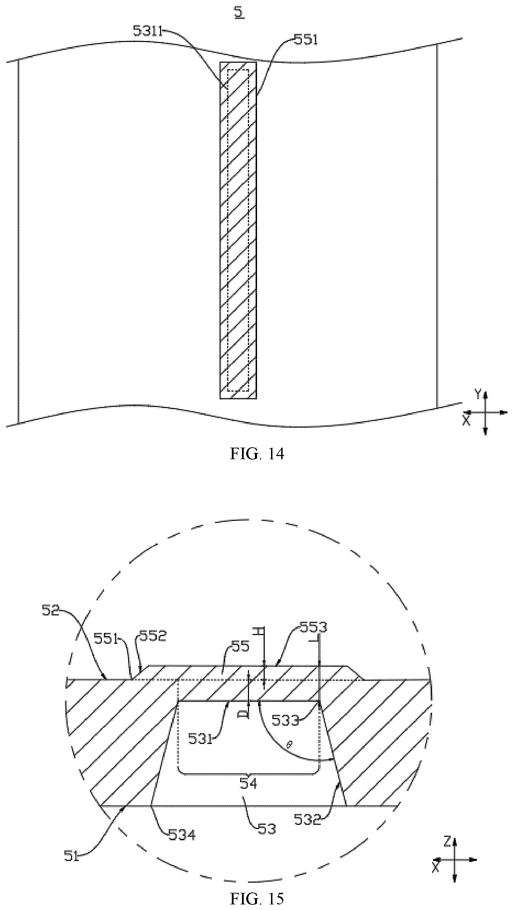

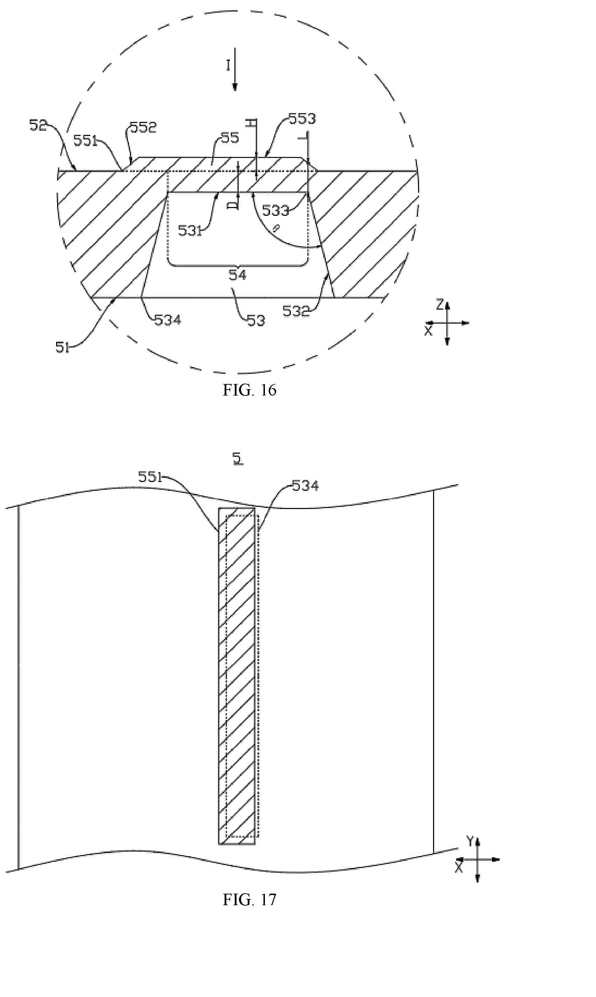

In some embodiments, referring to FIGS. 13 to 16, FIG. 13 is a partially enlarged view of an external component provided in some embodiments of the present application (where a projection of an edge line 5311 of a first groove bottom surface 531 along a first direction Z is located within a first region and does not contact a first profile line 551); FIG. 14 is a view along direction G of a housing component 5 shown in FIG. 13; FIG. 15 is a partially enlarged view of an external component provided in other embodiments of the present application (where a projection of an edge line 5311 of a first groove bottom surface 531 along a first direction Z is located within a first region and does not contact a first profile line 551); and FIG. 16 is a partially enlarged view of an external component provided in some other embodiments of the present application (where a projection of an edge line 5311 of a first groove bottom surface 531 along a first direction Z is located within a first region and does not contact a first profile line 551). Along the first direction Z, the first groove portion 53 includes a first groove bottom surface 531 located between the first surface 51 and the second surface 52. The outer surface of the protrusion 55 connects with the second surface 52 to form a first profile line 551. The first profile line 551 defines a first region. The projection of the edge line 5311 of the first groove bottom surface 531 along the first direction Z is located within the first region and does not contact the first profile line 551.

It can be understood that within the first region, the projection of the edge line 5311 of the first groove bottom surface 531 along the first direction Z is located on the inner side of the first profile line 551. In FIG. 14, the shaded region is shown as the first region.

As an example, in FIG. 13, the first end surface 553 of the protrusion 55 forms an obtuse angle with the outer side surface 552. The projection of the edge line 5311 of the first groove bottom surface 531 along the first direction Z is located within the outer side surface 552 of the protrusion 55. Along the first direction Z, the minimum distance between the edge line 5311 of the first groove bottom surface 531 and the outer side surface 552 of the protrusion 55 is the minimum residual thickness L of the housing component 5 at the connection position 533, L >D.

As an example, in FIG. 15, the first end surface 553 of the protrusion 55 forms an obtuse angle with the outer side surface 552. The projection of the edge line 5311 of the first groove bottom surface 531 along the first direction Z is located within the first end surface 553 of the protrusion 55. Along the first direction Z, the minimum distance between the edge line 5311 of the first groove bottom surface 531 and the first end surface 553 of the protrusion 55 is the minimum residual thickness L of the housing component 5 at the connection position 533, L >D.

As an example, in FIG. 16, the first end surface 553 of the protrusion 55 forms an obtuse angle with the outer side surface 552. A portion of the projection of the edge line 5311 of the first groove bottom surface 531 along the first direction Z is located within the first end surface 553 of the protrusion 55, and another portion is located within the outer side surface 552 of the protrusion 55. Along the first direction Z, the minimum distance between the edge line 5311 of the first groove bottom surface 531 and the outer side surface 552 of the protrusion 55 is the minimum residual thickness L of the housing component 5 at the connection position 533, L >D.

In the embodiment, the protrusion 55 completely covers the weak region 54. The protrusion 55 is connected to the weak region 54 and is also connected to the region of the housing component 5 outside the weak region 54, thus further enhancing the strengthening effect of the protrusion 55 on the weak region 54 and increasing the fatigue strength of the weak region 54.

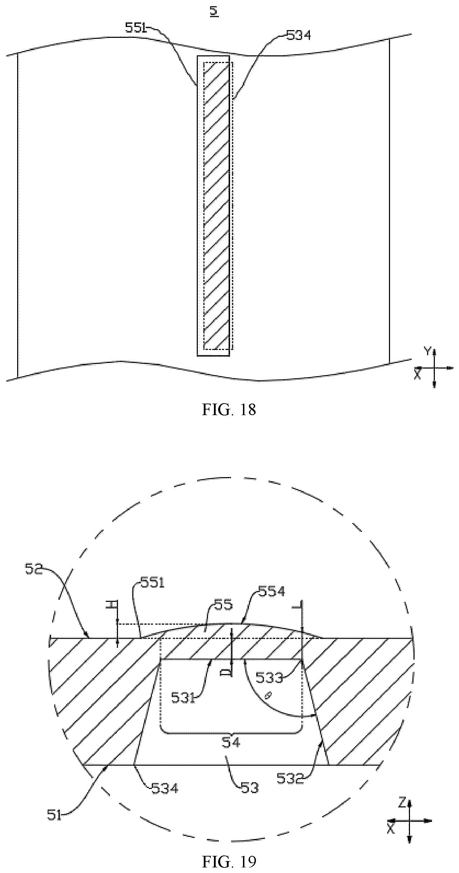

In some embodiments, referring to FIGS. 16 to 18, FIG. 17 is a view along direction I of a housing component 5 shown in FIG. 16 (showing a first region); and FIG. 18 is a view along direction I of a housing component 5 shown in FIG. 16 (showing a portion of a first region whose projection along a first direction Z is located within a first groove portion 53). The outer surface of the protrusion 55 connects with the second surface 52 to form a first profile line 551, and the first profile 551 defines a first region. An area of the first region is S₁, and an area of a portion of the projection of the first region along the first direction Z, which is located within the first groove portion 53, is S₂, satisfying a condition: S₂/S₁ ≥ 0.6.

S₂/S₁ can be the point value of any one of 0.6, 0.7, 0.8, 0.9, 1, or any range of values between any two of the values.

The first groove portion 53 forms a second profile line 534 on the first surface 51. The portion of the projection of the first region along the first direction Z that is located within the second profile line 534 is the portion of the first region whose projection along the first direction Z is located inside the first groove portion 53. In other words, the area of the overlap region between the projection of the region defined by the second profile line 534 along the first direction Z and the projection of the first region along the first direction Z is S₂.

As an example, in the embodiments shown in FIGS. 17 and 18, the first profile line 551 is rectangular, and the first region is the rectangular region defined by the first profile line 551. In FIG. 17, the shaded region represents the first region. In FIG. 18, the shaded region represents the portion of the projection of the first region along the first direction Z that is located within the first groove portion 53.

In the embodiment, S₂/S₁≥0.6, this allows more of the protrusion 55 to cover the weak region 54, thus enhancing the strengthening effect of the protrusion 55 on the weak region 54.

In some embodiments, referring to FIGS. 6, 7, 10, 11, 13, 15, and 16, along the first direction Z, the surface of the protrusion 55 away from the second surface 52 is a flat surface.

The surface of the protrusion 55 away from the second surface 52 is the first end surface 553 of the protrusion 55, meaning that the first end surface 553 is a flat surface. Along the first direction Z, there is a certain distance between the first end surface 553 and the second surface 52. The distance between the first end surface 553 and the second surface 52 is the height by which the protrusion 55 protrudes from the second surface 52.

In the embodiment, the surface of the protrusion 55 away from the second surface 52 is a flat surface. This ensures that the thickness of the region in which the protrusion 55 is covered by the flat surface is more uniform, thus providing uniform strengthening to different regions of the weak region 54. This structure makes the protrusion 55 easier to form.

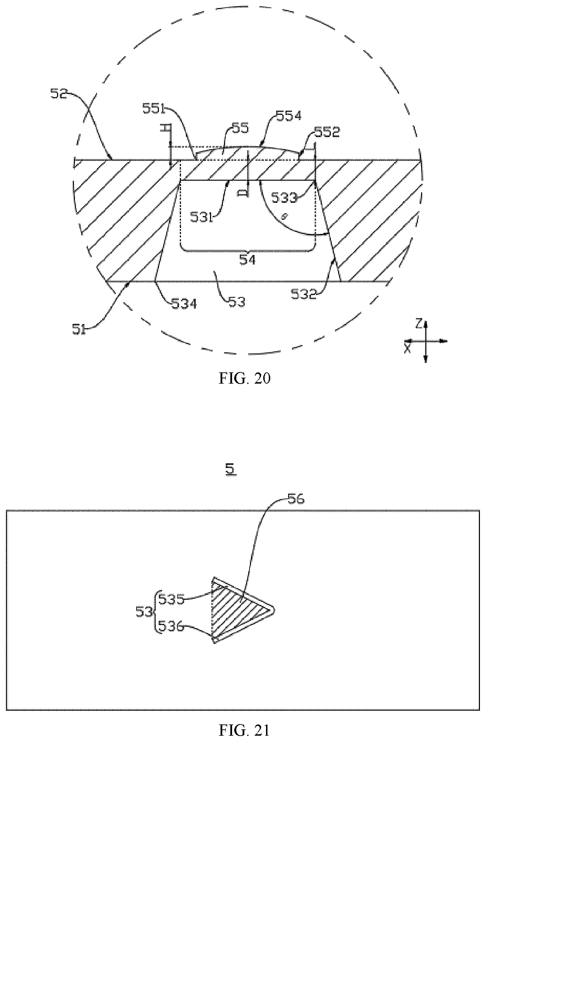

In some embodiments, referring to FIGS. 19 and 20, FIG. 19 is a partially enlarged view of a housing component 5 provided in some embodiments of the present application (where a surface of a protrusion 55 away from a second surface 52 is an arcuate surface 554); and FIG. 20 is a partially enlarged view of a housing component 5 provided in some other embodiments of the present application (where a surface of a protrusion 55 away from a second surface 52 is an arcuate surface 554). Along the first direction Z, a surface of the protrusion 55 away from the second surface 52 is an arcuate surface 554, and a cross-section of the arcuate surface 554 is a curve that protrudes in a direction opposite to the second surface 52 at a middle position.

The cross-section of the arcuate surface 554 is perpendicular to the extension direction of the protrusion 55. For example, if the protrusion 55 is a strip-like structure extending along a linear trajectory, the cross-section of the arcuate surface 554 is perpendicular to the linear trajectory. For another example, if the protrusion 55 is an arc-shaped structure extending along an arc trajectory, the cross-section of the arcuate surface 554 is perpendicular to the arc trajectory. As an example, in the embodiments shown in FIGS. 19 and 20, the cross-section is parallel to the first direction Z and the width direction X of the first groove portion, and the extension direction of the protrusion 55 is perpendicular to both the first direction Z and the width direction X of the first groove portion.

The first arcuate surface 554 can be directly connected to the second surface 52 or indirectly connected.

As an example, as shown in FIG. 19, the arcuate surface 554 is directly connected to the second surface 52, and the arcuate surface 554 is the outer surface of the protrusion 55. The arcuate surface 554 connects with the second surface 52 to form a first profile line 551. The first profile line 551 defines a first region. The projection of the edge line 5311 (not shown in FIG. 19) of the first groove bottom surface 531 along the first direction Z is located within the first region and does not contact the first profile line 551. Along the first direction Z, the minimum distance between the edge line 5311 of the first groove bottom surface 531 and the arcuate surface 554 is the minimum residual thickness L of the housing component 5 at the connection position 533.

As an example, as shown in FIG. 20, the arcuate surface 554 is indirectly connected to the second surface 52 via the outer side surface 552 of the protrusion 55. The arcuate surface 554 is the first end surface 553 of the protrusion 55, which is away from the second surface 52 (not shown in FIG. 20). The outer side surface 552 of the protrusion 55 and the arcuate surface 554 together form the outer surface of the protrusion 55. The outer side surface 552 of the protrusion 55 connects to the second surface 52 to form the first profile line 551. The projection of the first profile line 551 along the first direction Z is located within the first groove bottom surface 531 and does not contact with the edge line 5311 of the first groove bottom surface 531 (not shown in the FIG. 20).

In the embodiment, the surface of the protrusion 55 away from the second surface 52 is an arcuate surface 554. The structure makes the cross-section of the protrusion 55 approximately arch-shaped, offering better resistance to deformation. When the protrusion 55 is subjected to impact force, it is less likely to damage the weak region 54.

In some embodiments, an extension direction of the protrusion 55 coincides with an extension direction Y of the first groove portion.

For instance, if the first groove portion 53 extends along a linear trajectory, the protrusion 55 is of a strip-shaped structure extending along the linear trajectory; if the first groove portion 53 is an annular groove, the protrusion 55 is of an annular structure; if the first groove portion 53 is an arc-shaped groove, the protrusion 55 is of an arc-shaped structure; if the first groove portion 53 is a U-shaped groove, the protrusion 55 is of a U-shaped structure; and if the first groove portion 53 is an H-shaped groove, the protrusion 55 is of an H-shaped structure.

In the embodiment, an extension direction of the protrusion 55 coincides with an extension direction Y of the first groove portion. This realizes the strengthening of more regions of the weak region 54, thus enhancing the strengthening effect of the protrusion 55 on the weak region 54.

In some embodiments, the protrusion 55 and the weak region 54 are integrally molded. This provides a better-strengthening effect of the protrusion 55 on the weak region 54.

In some embodiments, the first groove portion 53 is stamped into the housing component 5.

When stamping the first groove portion 53 into the housing component 5, a protrusion 55 protruding from the second surface 52 can be formed at the corresponding position to the first groove portion 53, thus achieving the integral mold of the protrusion 55 and the weak region 54.

Moreover, forming the first groove portion 53 on the housing component 5 via punch forming refines the grains in the weak region 54, which improves the material mechanical properties of the weak region 54, enhances the fatigue resistance of the weak region 54, and reduces the risk of the weak region 54 being damaged during the normal use of the battery cell 10.

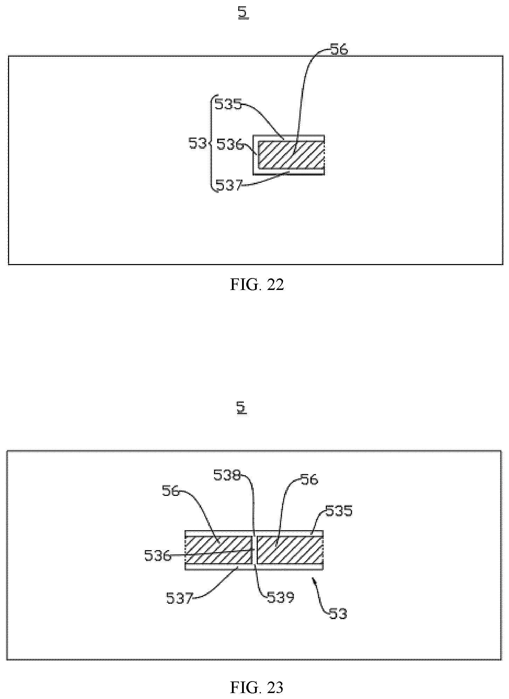

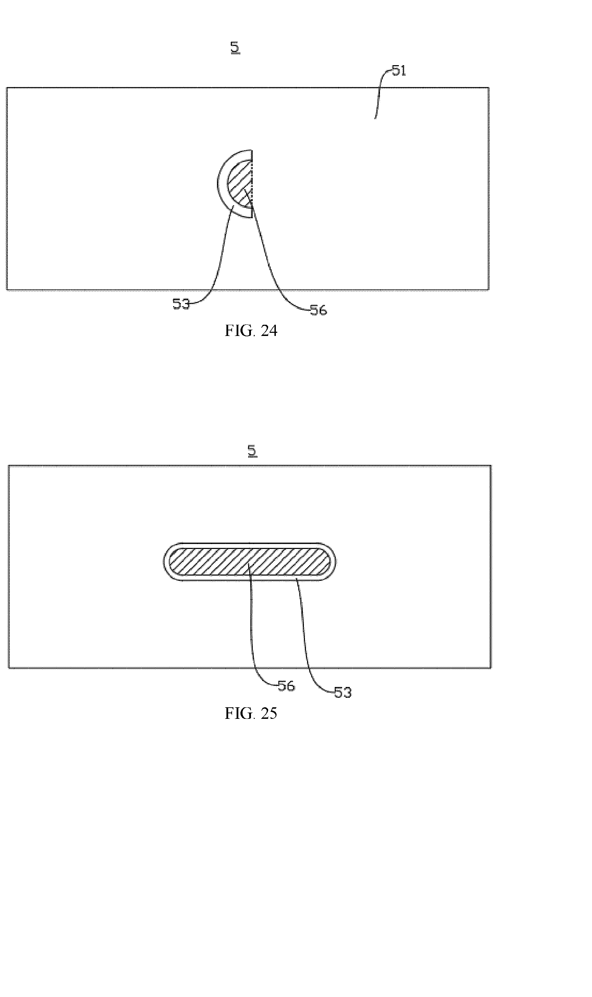

In some embodiments, referring to FIGS. 21 and 25, FIG. 21 is a structural schematic diagram of a housing component 5 provided in some embodiments of the present application (where a first groove portion 53 is V-shaped); FIG. 22 is a structural schematic diagram of a housing component 5 provided in some embodiments of the present application (where a first groove portion 53 is annular); FIG. 23 is a structural schematic diagram of a housing component 5 provided in some embodiments of the present application (where a first groove portion 53 is annular); FIG. 24 is a structural schematic diagram of a housing component 5 provided in some embodiments of the present application (where a first groove portion 53 is arc-shaped); and FIG. 25 is a structural schematic diagram of a housing component 5 provided in some embodiments of the present application (where a first groove portion 53 is annular). The first groove portion 53 defines a pressure relief region 56, and the first groove portion 53 is arranged along an edge of the pressure relief region 56.

The pressure relief region 56 is a region of the housing component 5 that can open after the weak region 54 is damaged. For instance, when the internal pressure of the battery cell 10 reaches a threshold, the weak region 54 cracks, and the pressure relief region 56 opens outward under the action of the emissions inside the battery cell 10. During the process, the weak region 54 cracks along the first groove portion 53, causing the pressure relief region 56 to open with the first groove portion 53 as a boundary. When the pressure relief region 56 is opened, the housing component 5 will form a discharge port at a position corresponding to the pressure relief region 56, and the emissions inside the battery cell 10 can be discharged through the discharge port to vent the pressure inside the battery cell 10.

During pressure relief, the pressure relief region 56 can open with the first groove portion 53 as a boundary, thus increasing the pressure relief area of the housing component 5 and improving the timeliness of pressure relief.

In some embodiments, referring to FIG. 21, the first groove portion 53 includes a first groove section 535 and a second groove section 536, wherein the first groove section 535 intersects with the second groove section 536, and both the first groove section 535 and the second groove section 536 are arranged along the edge of the pressure relief region 56.

The first groove section 535 and the second groove section 536 can be linear grooves or non-linear grooves, such as arc-shaped grooves. In embodiments where both the first groove section 535 and the second groove section 536 are linear grooves, it is understandable that both the first groove section 535 and the second groove section 536 extend along linear trajectories. The first groove section 535 and the second groove section 536 can form an acute angle, a right angle, or an obtuse angle. The first groove section 535 and the second groove section 536 can intersect in various arrangements. For example, the intersection location of the first groove section 535 and the second groove section 536 can be located at the midpoint of the first groove section 535 and the midpoint of the second groove section 536. As an example shown in FIG. 21, the intersection location of the first groove section 535 and the second groove section 536 is located at one end of the first groove section 535 and one end of the second groove section 536, wherein a V-shaped structure formed by the first groove section 535 and the second groove section 536 enables the first groove portion 53 to be a V-shaped groove. In FIG. 21, the triangular shaded region is the pressure relief region 56.

In the embodiment, the stress is more concentrated at the intersection position of the first groove section 535 and the second groove section 536, making the weak region 54 at the intersection position of the first groove section 535 and the second groove section 536 more prone to be damaged. This enhances the pressure relief sensitivity of the housing component 5, and enables timely pressure relief when the internal pressure of the battery cell 10 reaches the bursting pressure. Under a fixed bursting pressure of the battery cell 10, the weak region 54 can be made thicker, thus reducing the forming depth of the first groove portion 53.

In some embodiments, referring again to FIGS. 22 and 23, the first groove portion 53 further includes a third groove section 537, where the first groove section 535 is arranged opposite to the third groove section 537, and the third groove section 537 intersects with the second groove section 536. The first groove section 535, the second groove section 536, and the third groove section 537 are arranged along the edge of the pressure relief region 56.

The first groove section 535, the second groove section 536, and the third groove section 537 can be linear grooves or non-linear grooves, such as arc-shaped grooves. In an embodiment where the first groove section 535, second groove section 536, and third groove section 537 are all linear grooves, the first groove section 535, second groove section 536, and third groove section 537 extend along linear trajectories. The first groove section 535 and the third groove section 537 can be arranged parallel to each other or at a small non-zero angle. For instance, the angle between the first groove section 535 and the third groove section 537 can be less than 10°. The first groove section 535 and the third groove section 537 can both be perpendicular to the second groove section 536, or they can not be perpendicular to the second groove section 536. One or two pressure relief regions 56, defined by the first groove section 535, second groove section 536, and third groove section 537, can be provided.

In the embodiment, the pressure relief region 56 can open with the first groove section 535, the second groove section 536, and the third groove section 537 as boundaries, thus enabling large-area pressure relief. Additionally, the stress is more concentrated at the intersection position of the third groove section 537 and the second groove section 536, making the weak region 54 at the intersection position of the third groove section 537 and the second groove section 536 more prone to be damaged. This enhances the pressure relief sensitivity of the housing component 5, and enables timely pressure relief when the internal pressure of the battery cell 10 reaches the bursting pressure.

In some embodiments, referring to FIG. 22, the first groove section 535, the second groove section 536, and the third groove section 537 are sequentially connected.

The connection position 533 of the second groove section 536 with the first groove section 535 is located at one end of the first groove section 535 and one end of the second groove section 536. The connection position 533 of the second groove section 536 with the third groove section 537 is located at one end of the third groove section 537 and the other end of the second groove section 536. The first groove section 535, the second groove section 536, and the third groove section 537, when sequentially connected, can form a U-shaped structure or a Z-shaped structure. As an example, in the embodiment shown in FIG. 22, the first groove section 535, second groove section 536, and third groove section 537 are sequentially connected to form a U-shaped structure. The first groove section 535, second groove section 536, and third groove section 537 define a single pressure relief region 56. In FIG. 22, the rectangular shaded region is the pressure relief region 56.

In the embodiment, the first groove section 535, the second groove section 536, and the third groove section 537 are sequentially connected. The structure of the first groove portion 53 is simple and easy to form.

In some embodiments, referring to FIG. 23, the first groove section 535 and the second groove section 536 intersect at a first position 538, wherein the first position 538 is offset from both ends of the first groove section 535 in the extension direction. The third groove section 537 and the second groove section 536 intersect at a second position 539, wherein the second position 539 is offset from both ends of the third groove section 537 in the extension direction.

The first position 538 is the position where the first groove section 535 is connected to the second groove section 536. The first position 538 is offset from both ends of the first groove section 535 in the extension direction. That is to say, in the extension direction of the first groove section 535, the first position 538 is at a distance from both ends of the first groove section 535. The second position 539 is the position where the third groove section 537 is connected to the second groove section 536. The second position 539 is offset from both ends of the third groove section 537 in the extension direction. That is to say, in the extension direction of the third groove section 537, the second position 539 is at a distance from both ends of the third groove section 537.

The first groove section 535, the second groove section 536, and the third groove section 537 define two pressure relief regions 56, with the two pressure relief regions 56 located on both sides of the second groove section 536. The two rectangular shaded regions are shown in FIG. 23 are both pressure relief regions 56.

During pressure relief, the two pressure relief regions 56 can open in opposite directions for pressure relief, thus effectively improving the pressure relief efficiency of the housing component 5.

In some embodiments, referring to FIG. 23, the first position 538 is located at a midpoint of the first groove section 535 in the extension direction, and the second position 539 is located at the midpoint of the third groove section 537 in the extension direction.

As an example, the first groove section 535, the second groove section 536, and the third groove section 537 are all linear grooves extending along a linear trajectory. The first groove section 535 and the third groove section 537 are arranged in parallel, the first groove section 535 and the second groove section 536 are perpendicular, and the lengths of the first groove section 535 and the third groove section 537 are equal. The two pressure relief regions 56 are symmetrically arranged on both sides of the second groove section 536.

In the embodiment, the first position 538 and the second position 539 are located at the midpoint positions of the first groove section 535 and the third groove section 537, respectively. This ensures that the weak regions 54 at the first position 538 and the second position 539 are more prone to be damaged, thus improving the pressure relief sensitivity of the housing component 5 and enhancing the timeliness of pressure relief.

In some embodiments, referring to FIG. 24, the first groove portion 53 is a groove extending along a non-closed trajectory.

A non-closed trajectory refers to a trajectory whose two ends are not connected in the extension direction. A non-closed trajectory can be an arc-shaped trajectory, a U-shaped trajectory, a Z-shaped trajectory, etc.

The pressure relief region 56 defined by the first groove portion 53 can open in a flipping manner, and after opening, the pressure relief region 56 can connect with other regions of the housing component 5, thus reducing the risk of splashing when the pressure relief region 56 opens.

In some embodiments, referring to FIG. 24, the first groove portion 53 is an arc-shaped groove.

An arc-shaped groove is a groove that extends along an arc trajectory, and the arc trajectory is non-closed. The central angle of the arc-shaped groove can be less than, equal to, or greater than 180°. As an example, in the embodiment shown in FIG. 24, the central angle of the arc-shaped groove is 180°, and the pressure relief region 56 defined by the arc-shaped groove is semi-circular.

The structure of the arc-shaped groove is simple and easy to form. During pressure relief, the pressure relief region 56 can quickly rupture along the arc-shaped groove, thereby enabling rapid opening of the pressure relief region 56.

In some embodiments, referring to FIG. 25, the first groove portion 53 is a groove extending along a closed trajectory.

A closed trajectory refers to a trajectory whose two ends are connected, and a closed trajectory can be a circular trajectory, rectangular trajectory, elliptical trajectory, etc.

During pressure relief, the housing component 5 can rupture along the first groove portion 53, allowing the pressure relief region 56 to open in a detached manner. This increases the pressure relief area of the housing component 5 and improves the pressure relief rate of the housing component 5.

In some embodiments, the first groove portion 53 is an annular groove.

An annular groove can be a rectangular ring groove, circular ring groove, etc.

As an example, in FIG. 25, the first groove portion 53 is roughly a rectangular annular groove. The first groove portion 53 includes two straight sections and two arc sections. The two straight sections are arranged in parallel, and one straight section, one arc section, another straight section, and another arc section are connected end to end in sequence. The distance between the two straight sections is less than the minimum distance between the two arc sections.

In the embodiment, the structure of the annular groove is simple and easy to form. During pressure relief, the housing component 5 can rupture quickly along the annular groove to enable rapid opening of the pressure relief region 56.

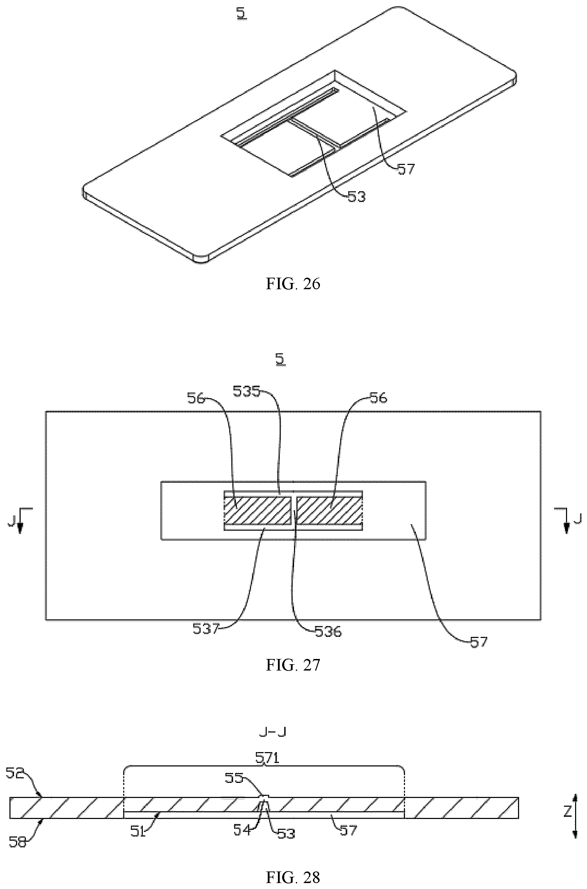

In some embodiments, referring to FIGS. 26 to 28, FIG. 26 is an isometric view of a housing component 5 provided by some embodiments of the present application; FIG. 27 is a schematic structural view of a housing component 5 shown in FIG. 26 (showing a first groove portion 53 and a second groove portion 57); and FIG. 28 is a sectional view in J-J direction of a housing component 5 shown in FIG. 27. The housing component 5 provides a second groove portion 57. Along a direction from the first surface 51 toward the second surface 52, the second groove portion 57 and the first groove portion 53 are arranged sequentially, and the groove bottom surface of the second groove portion 57 forms the first surface 51.

The shape of the second groove portion 57 can be the same as or different from the first groove portion 53. It can be understood that the housing component 5 is provided with at least two levels of groove portions, such as two-level groove portions, three-level groove portions, four-level groove portions, or more. Along the first direction Z, the two levels of groove portions of at least two-level groove portions, closest to the second surface 52, are the first groove portion 53 and the second groove portion 57, respectively.

The groove bottom surface of the second groove portion 57 forms the first surface 51. That is, the first groove portion 53 is recessed from the groove bottom surface of the second groove portion 57 in the direction approaching the second surface 52.

In the embodiment, the first groove portion 53 can be of various shapes, such as a V-shaped groove, U-shaped groove, H-shaped groove, arc-shaped groove, or ring-shaped groove. As an example, in the embodiments shown in FIGS. 26 to 28, the first groove portion 53 is an H-shaped groove.

As an example, as shown in FIG. 28, the housing component 5 further includes a third surface 58. Along the first direction Z, the third surface 58 is arranged opposite to the second surface 52. The distance between the third surface 58 and the second surface 52 is greater than the distance between the first surface 51 and the second surface 52. The second groove portion 57 is recessed from the third surface 58 in the direction facing the second surface 52. At the position corresponding to the weak region 54 in the housing component 5, only the first groove portion 53 and the second groove portion 57 are provided.

In the embodiment where the housing component 5 is the end cover 12, the distance between the third surface 58 and the second surface 52 can be the thickness of the end cover 12. The third surface 58 can be the outer surface of the end cover 12, and the second surface 52 can be the inner surface of the end cover 12, with the inner surface of the end cover 12 facing the interior of the battery cell 10. In the embodiment where the housing component 5 is the shell 11, the distance between the third surface 58 and the second surface 52 can be the thickness of the shell 11. The third surface 58 can be the outer surface of a wall portion of the shell 11, and the second surface 52 can be the inner surface of the wall portion of the shell 11.

During forming, the second groove portion 57 can first be formed on the housing component 5, and then the first groove portion 53 is formed on the housing component 5 to form a weak region 54. That is, the weak region 54 is formed after at least two levels of groove portions are formed on the housing component 5, which can reduce the forming depth of each level of the groove portion, thereby lowering the forming force experienced by the housing component 5 during forming and reducing the risk of cracks in the housing component 5.

In some embodiments, referring to FIG. 26, the first groove portion 53 and the pressure relief region 56 are both located on the groove bottom wall 571 of the second groove portion.

The groove bottom wall 571 of the second groove portion 57 is the portion of the housing component 5 between the groove bottom surface of the second groove portion 57 and the second surface 52. After forming the second groove portion 57 on the housing component 5, the remaining portion of the housing component 5 in the region where the second groove portion 57 is provided is the groove bottom wall 571 of the second groove portion. The pressure relief region 56 can be part of the groove bottom wall 571 of the second groove portion.

When the pressure relief region 56 opens toward the interior of the second groove portion 57, the second groove portion 57 can provide a clearance space for the pressure relief region 56. For example, when the third surface 58 is obstructed by an obstacle, the second groove portion 57 provides clearance space for the pressure relief region 56 to reduce the impact of the obstacle on the pressure relief region 56, thus allowing the pressure relief region 56 to open normally.

In some embodiments, the cross-section of the second groove portion 57 in a direction perpendicular to the first direction Z is polygonal or circular.

The polygon can be triangular, quadrilateral, pentagonal, hexagonal, etc. The second groove portion 57 can be a prismatic groove with a polygonal cross-section, a cylindrical groove with a circular cross-section, or a stepped groove with a polygonal or circular cross-section, wherein the cross-section is perpendicular to the first direction Z.

As an example, in the embodiments shown in FIGS. 26 to 28, the second groove portion 57 is a prismatic groove with a quadrilateral cross-section.

In the embodiment, the cross-section of the second groove portion 57 in a direction perpendicular to the first direction Z is polygonal or circular. The structure of the second groove portion 57 is simple, easy to form, and capable of providing more clearance space for the pressure relief region 56 during opening.

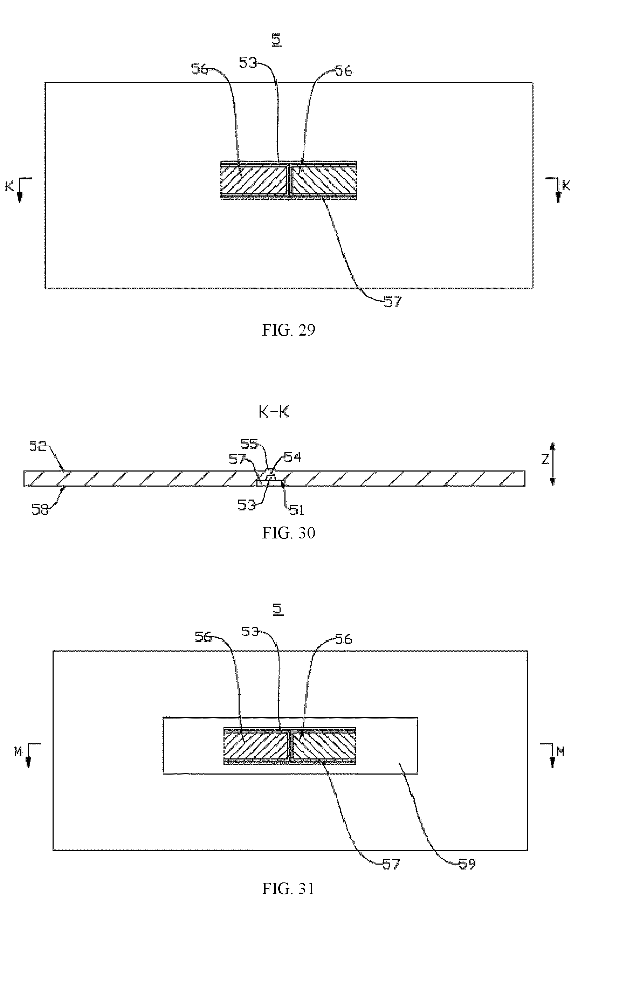

In some embodiments, referring to FIGS. 29 and 30, FIG. 29 is a structural schematic diagram of a housing component 5 provided in some embodiments of the present application (where both the first groove portion 53 and the second groove portion 57 are H-shaped grooves), and FIG. 30 is a sectional view in K-K direction of a housing component 5 shown in FIG. 29. An extension direction of the second groove portion 57 coincides with an extension direction Y of the first groove portion.

As an example, as shown in FIGS. 29 and 30, the first groove portion 53 extends along an H-shaped trajectory, and the second groove portion 57 also extends along an H-shaped trajectory. Both the first groove portion 53 and the second groove portion 57 are H-shaped grooves. The respective groove segments of the second groove portion 57 align in the same extension direction as the corresponding groove segments of the first groove portion 53.

It is understandable that in embodiments where the first groove portion 53 is a V-shaped groove, the second groove portion 57 is also a V-shaped groove; in embodiments where the first groove portion 53 is a U-shaped groove, the second groove portion 57 is also a U-shaped groove; in embodiments where the first groove portion 53 is an arc-shaped groove, the second groove portion 57 is also an arc-shaped groove; and in embodiments where the first groove portion 53 is an annular groove, the second groove portion 57 is also an annular groove.

An extension direction of the second groove portion 57 coincides with an extension direction Y of the first groove portion. Therefore, the shape of the second groove portion 57 is essentially consistent with the shape of the first groove portion 53, facilitating the forming of the second groove portion 57. When the first groove portion 53 and the second groove portion 57 are formed using a stamping process, the extrusion volume during the forming of the second groove portion 57 can be reduced, thereby lowering the forming force on the housing component 5.

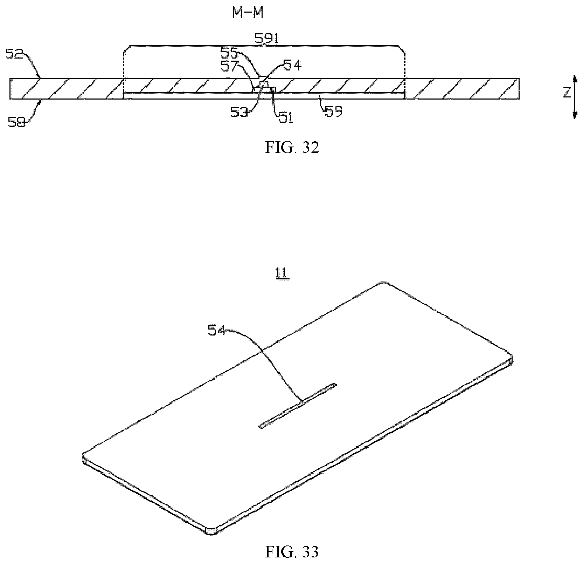

In some embodiments, referring to FIGS. 31 and 32, FIG. 31 is a structural schematic diagram of a housing component 5 provided in some embodiments of the present application (showing a first groove portion 53, a second groove portion 57, and a third groove portion 59); and FIG. 32 is a sectional view in M-M direction of a housing component 5 shown in FIG. 31. The housing component 5 provides a third groove portion 59, and the second groove portion 57 is arranged on the groove bottom surface of the third groove portion 59. The first groove portion 53, the second groove portion 57, and the pressure relief region 56 are all located on the groove bottom wall 591 of the third groove portion.

The groove bottom wall 591 of the third groove portion 59 is the portion of the housing component 5 between the groove bottom surface of the third groove portion 59 and the second surface 52. After forming the third groove portion 59 on the housing component 5, the remaining portion of the housing component 5 in the region where the third groove portion 59 is provided is the groove bottom wall 121b of the third portion. The pressure relief region 56 can be part of the groove bottom wall 591 of the third groove portion.

It can be understood that the housing component 5 is provided with at least three levels of groove portions, such as three-level groove portions, four-level groove portions, five-level groove portions, or more. Along the first direction Z, the three levels of groove portions of at least three-level groove portions, closest to the second surface 52, are the first groove portion 53, the second groove portion 57, and the third groove portion 59, respectively.

As an example, as shown in FIG. 32, the housing component 5 further includes a third surface 58. Along the first direction Z, the third surface 58 is arranged opposite to the second surface 52. The distance between the third surface 58 and the second surface 52 is greater than the distance between the first surface 51 and the second surface 52. The third groove portion 59 is recessed from the third surface 58 in the direction facing the second surface 52. The second groove portion 57 is recessed from the groove bottom surface of the third groove portion 59 in the direction facing the second surface 52. The first groove portion 53 is recessed from the groove bottom surface of the second groove portion 57 in the direction facing the second surface 52. At the position corresponding to the weak region 54 in the housing component 5, only the first groove portion 53, the second groove portion 57, and the third groove portion 59 are provided.

In the embodiment where the housing component 5 is the end cover 12, the distance between the third surface 58 and the second surface 52 can be the thickness of the end cover 12. The third surface 58 can be the outer surface of the end cover 12, and the second surface 52 can be the inner surface of the end cover 12, with the inner surface of the end cover 12 facing the interior of the battery cell 10. In the embodiment where the housing component 5 is the housing 11, the distance between the third surface 58 and the second surface 52 can be the thickness of the housing 11. The third surface 58 can be the outer surface of a wall portion of the housing 11, and the second surface 52 can be the inner surface of the wall portion of the housing 11.

During forming, the third groove portion 59 can first be formed on the housing component 5, the second groove portion 57 can formed on the housing component 5, and then the first groove portion 53 can be formed on the housing component 5 to form a weak region 54. That is, the weak region 54 is formed after at least three levels of groove portions are formed on the housing component 5, which can reduce the forming depth of each level of the groove portion, thereby lowering the forming force experienced by the housing component 5 during forming and reducing the risk of cracks in the housing component 5. Additionally, since the pressure relief region 56 is located on the groove bottom wall 591 of the third groove portion, when the pressure relief region 56 opens toward the interior of the third groove portion 59, the third groove portion 59 can provide a clearance space for the pressure relief region 56.

In some embodiments, the cross-section of the third groove portion 59 in a direction perpendicular to the first direction Z is polygonal or circular.

The polygon can be triangular, quadrilateral, pentagonal, hexagonal, etc. The second groove portion 57 can be a prismatic groove with a polygonal cross-section, a cylindrical groove with a circular cross-section, or a stepped groove with a polygonal or circular cross-section, wherein the cross-section is perpendicular to the first direction Z.

As an example, in the embodiments shown in FIGS. 31 to 32, the second groove portion 57 is a prismatic groove with a quadrilateral cross-section.

In the embodiment, the cross-section of the third groove portion 59 in a direction perpendicular to the first direction Z is polygonal or circular. The structure of the third groove portion 59 is simple, easy to form, and capable of providing more clearance space for the pressure relief region 56 during opening.

It should be noted that, in other embodiments, the housing component 5 can also be provided with a third groove portion 59, where the second groove portion 57 is arranged on the groove bottom surface of the third groove portion 59. The extension directions of the third groove portion 59 and the second groove portion 57 are both consistent with the extension direction Y of the first groove portion.

In some embodiments, referring to FIG. 33, FIG. 33 is a structural schematic diagram of an end cover 12 provided in some embodiments of the present application. The housing component 5 is an end cover 12, and the end cover 12 is configured to seal an opening of the housing 11, wherein the housing 11 is configured to accommodate the electrode assembly 2.

The end cover 12 can be a plate-shaped structure, such as circular or rectangular. As an example, in the embodiment shown in FIG. 33, the end cover 12 is a rectangular plate-shaped structure.

In the embodiment, the end cover 12 has a pressure relief function, thus improving the reliability of the battery cell 10. Additionally, the end cover 12, as the housing component 5, makes forming the weak region 54 on the end cover 12 less difficult.

In some embodiments, the second surface 52 is the surface of the end cover 12 facing the interior of the shell 11.

The first surface 51 and the second surface 52 are two opposing surfaces of the end cover 12 along the first direction Z, wherein the second surface 52 can be the surface of the end cover 12 furthest from the first surface 51 along the first direction Z, and the second surface 52 can be the inner surface of the end cover 12. The first direction Z is the thickness direction of the end cover 12. It can be understood that, in the embodiment where only the first groove portion 53 is provided in the end cover 12, the first surface 51 is the outer surface of the end cover 12; in the embodiment where only the first groove portion 53 and the second groove portion 57 are provided in the end cover 12, the third surface 58 is the outer surface of the end cover 12; and in the embodiment where only the first groove portion 53, the second groove portion 57, and the third groove portion 59 are provided in the end cover 12, the third surface 58 is the outer surface of the end cover 12.

In the embodiment, the second surface 52 is the surface of the end cover 12 facing the interior of the housing 11. Thus, the protrusion 55 on the second surface 52 is located inside the housing 11, thus effectively utilizing the internal space of the housing 11.

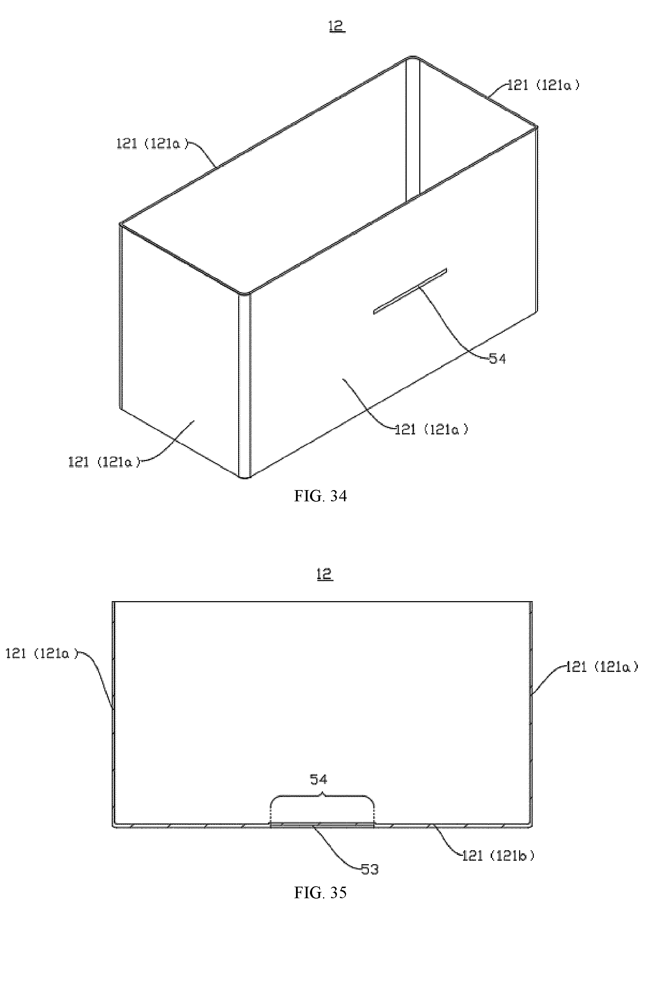

In some embodiments, referring to FIGS. 34 and 35, FIG. 34 is a structural schematic diagram of a housing 11 provided by some embodiments of the present application; and FIG. 35 is a sectional view of a housing 11 provided in some other embodiments of the present application. The housing component 5 is a housing 11, and the housing 11 has an opening, wherein the housing 11 is configured to accommodate the electrode assembly 2.

The housing 11 of the shell 1 is the housing component 5, and the end cover 12 of the shell 1 is configured to seal an opening of the housing 11. The housing 11 can be a hollow structure with an opening formed at one end, or the housing 11 can be a hollow structure with openings formed at two opposite ends. The housing 11 can be a rectangular cuboid, a cylinder, or other shapes.

In the embodiment, the shell 1 has a pressure relief function, thus ensuring the battery cell 10 to have a good reliability.

In some embodiments, the housing 11 includes multiple integrally molded wall portions 121, and the multiple wall portions 121 collectively define an internal space of the housing 11, with at least one wall portion 121 forming a weak region 54.

In the housing 11, the first groove portion 53 can be arranged on one wall portion 121 to correspondingly form the weak region 54. Or, the first groove portion 53 can be arranged on multiple wall portions 121, such that a weak region 54 is correspondingly formed on each wall portion 121 provided with the first groove portion 53.

For the wall portion 121 provided with the first groove portion 53, the first surface 51 and the second surface 52 are two opposing surfaces of the wall portion 121 along the first direction Z, where the first direction Z is the thickness direction of the wall portion 121 in which the weak region 54 is formed. The first surface 51 can face the interior of the housing 11, and the second surface 52 can face away from the interior of the housing 11. Or, the second surface 52 can face the interior of the housing 11, and the first surface 51 can be away from the interior of the housing 11.

In the embodiment, the integrally molded wall portions 121 provide the housing 11 with good structural stability, and the wall portions 121 are less likely to be damaged when forming the weak region 54.

In some embodiments, referring to FIGS. 34 and 35, the multiple wall portions 121 include a bottom wall 121b and multiple side walls 121a surrounding the bottom wall 121b, wherein the housing 11 forms an opening at the end opposite the bottom wall 121b; the bottom wall 121b forms a weak region 54; and/or at least one side wall 121a forms a weak region 54.

It can be understood that the housing 11 is a hollow structure with an opening formed at one end.

Three, four, five, six, or more side walls 121a of the housing 11 can be provided. In the housing 11, a portion of the side wall 121a can form the weak region 54, or all the side walls 121a can form the weak region 54. Taking the housing 11 with four side walls 121a as an example, one, two, three, or all four side walls 121a can be formed with the weak regions 54.

As an example, in the embodiment shown in FIG. 34, the housing 11 includes four side walls 121a, with only one side wall 121a forming the weak region 54; and in the embodiment shown in FIG. 35, only the bottom wall 121b of the housing 11 forms the weak region 54, and the side wall 121a does not form the weak region 54.

For the battery cell 10, if the bottom wall 121b of the housing 11 forms the weak region 54, pressure relief can be achieved through the bottom wall 121b when the battery cell 10 undergoes thermal runaway; and if at least one side wall 121a forms the weak region 54, pressure relief can be achieved through the side wall 121a when the battery cell 10 undergoes thermal runaway.

In some embodiments, the second surface 52 is the surface of the wall portion 121 that is provided with the weak region 54 and faces the interior of the housing 11.

For the wall portion 121 provided with the weak region 54, the first surface 51 and the second surface 52 are two opposing surfaces of the wall portion 121 along the first direction Z, wherein the second surface 52 can be the surface of the wall portion 121 furthest from the first surface 51 along the first direction Z, and the second surface 52 can be the inner surface of the wall portion 121. It can be understood that, in the embodiment where only the first groove portion 53 is provided in the wall portion 121, the first surface 51 is the outer surface of the wall portion 121. In the embodiment where only the first groove portion 53 and the second groove portion 57 are provided in the wall portion 121, the third surface 58 is the outer surface of the wall portion 121. In the embodiment where only the first groove portion 53, the second groove portion 57, and the third groove portion 59 are provided in the wall portion 121, the third surface 58 is the outer surface of the wall portion 121.

In the embodiment, the second surface 52 is the surface of the wall portion 121, which is provided with the weak region 54 and faces the interior of the housing 11. Thus, the protrusion 55 on the second surface 52 is located inside the housing 11, thus effectively utilizing the internal space of the housing 11.

In some embodiments, referring to FIGS. 34 and 35, the housing 11 is a rectangular cuboid, which is suitable for rectangular battery cells 10, thereby meeting the requirements for large-capacity battery cells 10.

In some embodiments, the material of the housing component 5 includes aluminum alloy.

It can be understood that, in the embodiment where the housing component 5 is the end cover 12, the material of the end cover 12 can be aluminum alloy; in the embodiment where the housing component 5 is the housing 11, the material of the housing 11 can be aluminum alloy.

Aluminum alloy housing components 5 are lightweight, have good ductility, and are easy to form.

In a second aspect, the embodiments of the present application provide a battery cell 10, including any one of the housing components 5 provided in any embodiment mentioned above.

In some embodiments, the battery cell 10 further includes a housing 11, wherein the housing 11 has an opening, and the housing 11 is configured to accommodate the electrode assembly 2. The housing component 5 is an end cover 12, and the end cover 12 seals the opening.

In some embodiments, the housing component 5 is a housing 11, and the housing 11 has an opening, wherein the housing 11 is configured to accommodate the electrode assembly 2. The battery cell 10 further includes an end cover 12, and the end cover 12 seals the opening.

The embodiments of the present application provide a battery 100, comprising any of the battery cells 10 provided in the above embodiments.

The embodiments of the present application further provide electrical equipment, which includes battery cell 10 provided by any of the embodiments as described above. The battery cell 10 is configured to supply electric energy.

In some embodiments, the present application provides an end cover 12 for a battery cell 10, wherein the end cover 12 has a first surface 51 and a second surface 52, with the first surface 51 and the second surface 52 oppositely arranged along the thickness direction of the end cover 12. The first surface 51 is the outer surface of the end cover 12, and the second surface 52 is the inner surface of the end cover 12, with the inner surface facing the interior of the battery cell 10. The end cover 12 is provided with a first groove portion 53 recessed from the first surface 51 in a direction toward the second surface 52. The end cover 12 forms a weak region 54 at the bottom of the first groove portion 53, and the weak region 54 is configured to be damaged when the battery cell 10 releases internal pressure. Along the first direction Z, a protrusion 55 protruding from the second surface 52 is arranged on a side of the weak region 54 away from the first groove portion 53. An extension direction of the protrusion 55 coincides with an extension direction Y of the first groove portion.

Along the first direction Z, the first groove portion 53 includes a first groove bottom surface 531 located between the first surface 51 and the second surface 52. The outer surface of the protrusion 55 connects with the second surface 52 to form a first profile line 551. The first profile line 551 defines a first region. The projection of the edge line 5311 of the first groove bottom surface 531 along the first direction Z is located within the first region and does not contact the first profile line 551. An area of the first region is S₁, and an area of a portion of the projection of the first region along the first direction Z, which is located within the first groove portion 53, is S₂, satisfying a condition: S₂/S₁ ≥ 0.6. A minimum distance between the first groove bottom surface 531 and the second surface 52 is D, and a height of the protrusion 55 protruding from the second surface 52 is satisfying conditions: 0.03≤H/(D+H)≤0.33 and 0.05mm≤H≤0.55mm. The first groove portion 53 includes a first groove bottom surface 531 and a first groove side surface 532 connected to the first groove bottom surface 531. An angle between the first groove side surface 532 and the first groove bottom surface 531 is θ with a unit of degree. The first groove side surface 532 is connected to the first groove bottom surface 531 at a connection position 533. Along the first direction Z, a minimum residual thickness of the housing component 5 at the connection position 533 is L with a unit of mm, satisfying a condition: 90 ≤ θ/L ≤ 5833.

In some embodiments, the present application provides a housing 11 for a battery cell 10, wherein the housing 11 is a rectangular housing with an opening formed at one end. The housing 11 includes multiple integrally molded wall portions 121, and the multiple wall portions 121 collectively define an internal space of the housing 11, with at least one wall portion 121 forming a weak region 54. The wall portion 121 formed with a weak region 54 has a first surface 51 and a second surface 52, with the first surface 51 and the second surface 52 arranged opposite each other along the thickness direction of the wall portion 121. The first surface 51 is the outer surface of the wall portion 121, and the second surface 52 is the inner surface of the wall portion 121, with the inner surface facing the interior of the battery cell 10. The wall portion 121 is provided with a first groove portion 53 recessed from the first surface 51 in a direction toward the second surface 52. The wall portion 121 forms a weak region 54 at the bottom of the first groove portion 53, and the weak region 54 is configured to be damaged when the battery cell 10 releases internal pressure. Along the first direction Z, a protrusion 55 protruding from the second surface 52 is arranged on a side of the weak region 54 away from the first groove portion 53. An extension direction of the protrusion 55 coincides with an extension direction Y of the first groove portion.

Along the first direction Z, the first groove portion 53 includes a first groove bottom surface 531 located between the first surface 51 and the second surface 52. The outer surface of the protrusion 55 connects with the second surface 52 to form a first profile line 551. The first profile line 551 defines a first region. The projection of the edge line 5311 of the first groove bottom surface 531 along the first direction Z is located within the first region and does not contact the first profile line 551. An area of the first region is S₁, and an area of a portion of the projection of the first region along the first direction Z, which is located within the first groove portion 53, is S₂, satisfying a condition: S₂/S₁ ≥ 0.6. A minimum distance between the first groove bottom surface 531 and the second surface 52 is D, and a height of the protrusion 55 protruding from the second surface 52 is satisfying conditions: 0.03≤H/(D+H)≤0.33 and 0.05mm≤H≤0.55mm. The first groove portion 53 includes a first groove bottom surface 531 and a first groove side surface 532 connected to the first groove bottom surface 531. An angle between the first groove side surface 532 and the first groove bottom surface 531 is θ with a unit of degree. The first groove side surface 532 is connected to the first groove bottom surface 531 at a connection position 533. Along the first direction Z, a minimum residual thickness of the housing component 5 at the connection position 533 is L with a unit of mm, satisfying a condition: 90 ≤ θ/L ≤ 5833.

It should be noted that the embodiments and features described in the present application can be combined without conflict.

The above embodiments are provided only to illustrate the technical solutions of the present application and are not intended to limit the scope of the present application. For those skilled in the art, various modifications and changes can be made to the present application. Any modification, equivalent substitution, improvement, etc. made within the spirit and principles of the present application shall be included in the scope of protection of the present application.

## Claims

1. A housing component for a battery cell, wherein the housing component comprises a first surface and a second surface, the first surface and the second surface are oppositely arranged along a first direction, and the housing component is provided with a first groove portion recessed from the first surface in a direction proximate to the second surface; and
the housing component forms a weak region at a bottom of the first groove portion, wherein the weak region is configured to be damaged when the battery cell releases internal pressure, and along the first direction, a protrusion protruding from the second surface is arranged on a side of the weak region away from the first groove portion.

2. The housing component according to claim 1, wherein along the first direction, the first groove portion comprises a first groove bottom surface located between the first surface and the second surface, a minimum distance between the first groove bottom surface and the second surface is D, and a height of the protrusion protruding from the second surface is H, satisfying a condition: 0.01 ≤ H/(D+H) ≤ 0.67.

3. The housing component according to claim 1 or 2, wherein 0.03≤ H/(D+H) ≤0.33.

4. The housing component according to any one of claims 1 to 3, wherein along the first direction, a height of the protrusion protruding from the second surface is H, satisfying a condition: 0.01mm ≤ H ≤ 0.96mm.

5. The housing component according to claim 4, wherein 0.05mm ≤H ≤0.55mm.

6. The housing component according to any one of claims 1 to 5, wherein the first groove portion comprises a first groove bottom surface and a first groove side surface connected to the first groove bottom surface, an angle between the first groove side surface and the first groove bottom surface is θ with a unit of degree, the first groove side surface is connected to the first groove bottom surface at a connection position, and along the first direction, a minimum residual thickness of the housing component at a connection position is L with a unit of mm, satisfying a condition: 90 ≤ θ/L ≤ 5833.

7. The housing component according to claim 6, wherein 220≤θ/L≤933.

8. The housing component according to claim 6 or 7, wherein 90°≤θ≤175°.

9. The housing component according to any one of claims 6 to 8, wherein 0.03mm≤L≤1mm.

10. The housing component according to any one of claims 1 to 9, wherein along the first direction, the first groove portion comprises a first groove bottom surface located between the first surface and the second surface; and
an outer surface of the protrusion connects with the second surface to form a first profile line, and a projection of the first profile line along the first direction is located within the first groove bottom surface.

11. The housing component according to claim 10, wherein the projection of the first profile line along the first direction coincides with an edge line of the first groove bottom surface within the first groove bottom surface.

12. The housing component according to claim 10, wherein the projection of the first profile line along the first direction does not contact with an edge line of the first groove bottom surface within the first groove bottom surface.

13. The housing component according to any one of claims 1 to 9, wherein along the first direction, the first groove portion comprises a first groove bottom surface located between the first surface and the second surface; and
the outer surface of the protrusion connects with the second surface to form a first profile line, wherein the first profile line defines a first region, and a projection of the edge line of the first groove bottom surface along the first direction is located within the first region and does not contact the first profile line.

14. The housing component according to any one of claims 1 to 13, wherein the outer surface of the protrusion connects with the second surface to form a first profile line, the first profile defines a first region, an area of the first region is S₁, and an area of a portion of the projection of the first region along the first direction, which is located within the first groove portion, is S₂, satisfying a condition: S₂/S₁≥0.6.

15. The housing component according to any one of claims 1 to 14, wherein along the first direction, the surface of the protrusion away from the second surface is a flat surface.

16. The housing component according to any one of claims 1 to 14, wherein along the first direction, a surface of the protrusion away from the second surface is an arcuate surface, and a cross-section of the arcuate surface is a curve that protrudes in a direction away from the second surface at a middle position.

17. The housing component according to any one of claims 1 to 16, wherein an extension direction of the protrusion coincides with an extension direction of the first groove portion.

18. The housing component according to any one of claims 1 to 17, wherein the protrusion and the weak region are integrally molded.

19. The housing component according to any one of claims 1 to 18, wherein the first groove portion is stamped into the housing component.

20. The housing component according to any one of claims 1 to 19, wherein the first groove portion defines a pressure relief region, and the first groove portion is arranged along an edge of the pressure relief region.

21. The housing component according to claim 20, wherein the first groove portion comprises a first groove section and a second groove section, the first groove section intersects with the second groove section, and both the first groove section and the second groove section are arranged along the edge of the pressure relief region.

22. The housing component according to claim 21, wherein the first groove portion further comprises a third groove section, the first groove section is arranged opposite to the third groove section, the third groove section intersects with the second groove section, and the first groove section, the second groove section, and the third groove section are arranged along the edge of the pressure relief region.

23. The housing component according to claim 22, wherein the first groove section, the second groove section, and the third groove section are sequentially connected.

24. The housing component according to claim 22, wherein the first groove section and the second groove section intersect at a first position, the first position is offset from both ends of the first groove section in an extension direction, the third groove section and the second groove section intersect at a second position, and the second position is offset from both ends of the third groove section in the extension direction.

25. The housing component according to claim 24, wherein the first position is located at a midpoint of the first groove section in the extension direction, and the second position is located at the midpoint of the third groove section in the extension direction.

26. The housing component according to claim 20, wherein the first groove portion is a groove extending along a non-closed trajectory.

27. The housing component according to claim 26, wherein the first groove portion is an arc-shaped groove.

28. The housing component according to claim 20, wherein the first groove portion is a groove extending along a closed trajectory.

29. The housing component according to claim 28, wherein the first groove portion is an annular groove.

30. The housing component according to any one of claims 20 to 29, wherein the housing component provides a second groove portion, along a direction from the first surface toward the second surface, the second groove portion and the first groove portion are arranged sequentially, and a groove bottom surface of the second groove portion forms the first surface.

31. The housing component according to claim 30, wherein the first groove portion and the pressure relief region are both located on the groove bottom wall of the second groove portion.

32. The housing component according to claim 31, wherein a cross-section of the second groove portion in a direction perpendicular to the first direction is polygonal or circular.

33. The housing component according to claim 30, wherein an extension direction of the second groove portion coincides with an extension direction of the first groove portion.

34. The housing component according to claim 33, wherein the housing component provides a third groove portion, and the second groove portion is arranged on a groove bottom surface of the third groove portion; and the first groove portion, the second groove portion, and the pressure relief region are all located on the groove bottom wall of the third groove portion.

35. The housing component according to claim 34, wherein a cross-section of the third groove portion in a direction perpendicular to the first direction is polygonal or circular.

36. The housing component according to any one of claims 1 to 35, wherein the housing component is an end cover, the end cover is configured to seal an opening of the housing, and the housing is configured to accommodate an electrode assembly.

37. The housing component according to claim 36, wherein the second surface is a surface of the end cover facing an interior of the housing.

38. The housing component according to any one of claims 1 to 35, wherein the housing component is a housing, the housing has an opening, and the housing is configured to accommodate the electrode assembly.

39. The housing component according to claim 38, wherein the housing comprises multiple integrally molded wall portions, and the multiple wall portions collectively define an internal space of the housing, with at least one wall portion forming a weak region.

40. The housing component according to claim 39, wherein the multiple wall portions comprise a bottom wall and multiple side walls surrounding the bottom wall, wherein the housing forms an opening at the end opposite the bottom wall;
the bottom wall forms a weak region, and/or at least one side wall forms a weak region.

41. The housing component according to claim 39 or 40, wherein the second surface is a surface of the wall portion that is provided with the weak region and faces an interior of the housing.

42. The housing component according to any one of claims 38 to 41, wherein the housing is a rectangular cuboid.

43. The housing component according to any one of claims 1 to 42, wherein a material of the housing component comprises an aluminum alloy.

44. A battery cell, comprising the housing component according to any one of claims 1 to 43.

45. The battery cell according to claim 44, wherein the battery cell further comprises a housing, the housing has an opening, and the housing is configured to accommodate the electrode assembly; and
the housing component is an end cover, and the end cover seals the opening.

46. The battery cell according to claim 44, wherein the housing component is a housing, the housing has an opening, and the housing is configured to accommodate the electrode assembly; and
the battery cell further comprises an end cover, and the end cover seals the opening.

47. A battery, comprising the battery cell according to any one of claims 44 to 46.

48. An electric device, comprising the battery cell according to any one of claims 44 to 46, wherein the battery cell is configured to provide electrical energy.
